# EUROPEAN PATENT APPLICATION

(11) **EP 4 534 232 A1**
(43) Date of publication of application: **09.04.2025**
(21) Application number: 22944802.2
(22) Date of filing: 31.05.2022
(51) Int. Cl.: B23K 26/36, B23K 26/00

(54) **PROCESSING SYSTEM**

(71) Applicant: NIKON CORPORATION, Tokyo 140-8601 (JP)
(72) Inventor: TATSUZAKI, Yosuke, Tokyo 140-8601 (JP)
(74) Representative: Hoffmann Eitle
(86) International application number: PCT/JP2022/022099
(87) International publication number: WO 2023/233514

(57) **Abstract**

A processing system includes: a processing apparatus configured to perform a subtractive manufacturing for removing a part of an object by irradiating the object with an energy beam; and a control apparatus configured to control the processing apparatus to remove a target processing part in the subtractive manufacturing, the control apparatus controls the processing apparatus to perform a first operation for removing at least a part of a first part by irradiating the first part of the target processing part with the energy beam having a first fluence, and a second operation for removing at least a part of a second part by irradiating the second part of the target processing part with the energy beam having a second fluence that is lower than the first fluence, the first part is adjacent to the second part along a first direction that intersects a propagating direction of the energy beam.

## Description

### Technical Field

The present invention relates to a processing system that is configured to process an object by an energy beam.

### Background Art

A Patent Literature 1 discloses a processing system that is configured to process an object by irradiating the object with laser light that is one example of an energy beam. This type of processing system is required to appropriately process the object.

### Citation List

### Patent Literature

Patent Literature 1: US4,427,872B

### Summary of Invention

A first aspect provides a processing system including: a processing apparatus that is configured to perform a subtractive manufacturing for removing a part of an object by irradiating the object with an energy beam; and a control apparatus that is configured to control the processing apparatus to remove a target processing part in the subtractive manufacturing, wherein the control apparatus controls the processing apparatus to perform: a first operation for removing at least a part of a first part by irradiating the first part of the target processing part with the energy beam having a first fluence; and a second operation for removing at least a part of a second part by irradiating the second part of the target processing part with the energy beam having a second fluence that is lower than the first fluence, the first part is adjacent to the second part along a first direction that intersects a propagating direction of the energy beam.

A second aspect provides a processing system including: a processing apparatus that is configured to perform a subtractive manufacturing for removing a part of an object by irradiating the object with an energy beam; and a control apparatus that is configured to control the processing apparatus to remove a target processing part in the subtractive manufacturing, wherein the control apparatus is switchable between a first mode in which the subtractive manufacturing of a part of the target processing part adjacent to a non-target processing part of the object is performed in a state where a center of a beam spot of the energy beam is positioned on a boundary between the target processing part and the non-target processing part on a surface of the object and a second mode in which the subtractive manufacturing of a part of the target processing part adjacent to the non-target processing part is performed in a state where the center of the beam spot of the energy beam is positioned at a position that is away from the boundary toward an inside of the target processing part on the surface of the object.

A third aspect provides processing system including: a processing apparatus that is configured to perform a subtractive manufacturing for removing a part of an object by irradiating the object with an energy beam; and a control apparatus that is configured to control the processing apparatus to remove a target processing part in the subtractive manufacturing, wherein the control apparatus performs the subtractive manufacturing in a state where a center of a beam spot of the energy beam is positioned only in an inside of the target processing part that is away from a boundary between the target processing part and a non-target processing part on the surface of the object.

A fourth aspect provides a processing system including: a processing apparatus that is configured to perform a subtractive manufacturing for removing a part of an object by irradiating the object with an energy beam; an acquisition unit that is configured to acquire processing data related to a target processing part in the subtractive manufacturing and information related to the energy beam; a calculation unit is configured to change the processing data based on the information related to the energy beam to output changed processing data; and a control apparatus that is configured to control the processing apparatus to remove a part of the object based on the changed processing data, wherein the subtractive manufacturing is performed in a state where a center of a beam spot of the energy beam is positioned only in an inside of the target processing part.

A fifth aspect provides a processing system including: a processing apparatus that is configured to perform a subtractive manufacturing for removing a part of an object by irradiating the object with an energy beam; and a control apparatus that is configured to control the processing apparatus to remove a target processing part in the subtractive manufacturing, wherein the control apparatus controls the processing apparatus to perform: a first operation for removing at least a part of a first part by irradiating the first part of the target processing part with the energy beam in a first condition; and a second operation for removing at least a part of a second part by irradiating the second part of the target processing part with the energy beam in a second condition that is different from the first condition, the first part is adjacent to the second part.

A sixth aspect provides a processing system including: a processing apparatus that is configured to perform a subtractive manufacturing for removing a part of an object by irradiating the object with an energy beam; and a control apparatus that is configured to control the processing apparatus to remove a target processing part in the subtractive manufacturing, wherein a center of the energy beam is positioned only in an inside of the target processing part.

A seventh aspect provides a processing system including: a processing apparatus that is configured to perform a subtractive manufacturing for removing a part of an object by irradiating the object with an energy beam; an acquisition unit that is configured to acquire changed processing data obtained by changing processing data related to a target processing part in the subtractive manufacturing; and a control apparatus that is configured to control the processing apparatus to remove a part of the object based on the changed processing data, wherein a center of the energy beam is positioned only in an inside of the target processing part.

### Brief Description of Drawings

[FIG. 1] FIG. 1 is a perspective view that schematically illustrates an exterior appearance of a processing system in a present example embodiment.
[FIG. 2] FIG. 2 is a block diagram that illustrates a configuration of the processing system in the present example embodiment.
[FIG. 3] FIG. 3 is a cross-sectional view that illustrates a configuration of an irradiation optical system.
[FIG. 4] Each of FIG. 4A to FIG. 4D is a cross-sectional view that illustrates an aspect of a removal processing performed on a workpiece.
[FIG. 5] FIG. 5A is a cross-sectional view that illustrates a workpiece whose processing target part is not removed and a workpiece whose processing target part has been removed, and FIG. 5B is a top view that illustrates the workpiece whose processing target part is not removed and the workpiece whose processing target part has been removed.
[FIG. 6] FIG. 6 is a cross-sectional view that illustrates an enlarged wall part (wall surface).
[FIG. 7] FIG. 7 is a cross-sectional view that illustrates the enlarged wall part (wall surface).
[FIG. 8] FIG. 8A is a cross-sectional view that illustrates examples of a first part and a second part of the target processing part, and FIG. 8B is a top view that illustrates the examples of the first part and the second part of the target processing part.
[FIG. 9] FIG. 9 is a graph that illustrates fluence of processing light.
[FIG. 10] FIG. 10A is a cross-sectional view that illustrates the processing light entering a surface of the workpiece by a first incident angle, and FIG. 10B is a cross-sectional view that illustrates the processing light entering the surface of the workpiece by a second incident angle that is larger than the first incident angle.
[FIG. 11] FIG. 11 is a graph that illustrates an intensity of the processing light emitted from a processing light source.
[FIG. 12] FIG. 12 is a graph that illustrates a size of a beam spot of the processing light.
[FIG. 13] FIG. 13 is a cross-sectional view that illustrates the workpiece on which a first subtractive manufacturing operation has been performed.
[FIG. 14] FIG. 14 is a cross-sectional view that illustrates the workpiece on which a second subtractive manufacturing operation has been performed, subsequent to the first subtractive manufacturing operation illustrated in FIG. 13.
[FIG. 15] FIG. 15 is a cross-sectional view that illustrates the workpiece on which the first subtractive manufacturing operation has been performed, subsequent to the second subtractive manufacturing operation illustrated in FIG. 14.
[FIG. 16] FIG. 16 is a cross-sectional view that illustrates the workpiece on which the second subtractive manufacturing operation has been performed, subsequent to the first subtractive manufacturing operation illustrated in FIG. 15.
[FIG. 17] FIG. 17 is a top view that illustrates a movement trajectory of an irradiation position of the processing light by the first subtractive manufacturing operation.
[FIG. 18] Each of FIG. 18A and FIG. 18B is a cross-sectional view that illustrates the workpiece on which the subtractive manufacturing has been performed.
[FIG. 19] FIG. 19 is a cross-sectional view that illustrates examples of the first part, the second part, and a third part of the target processing part.
[FIG. 20] Each of FIG. 20A and FIG. 20B is a cross-sectional view that illustrates the workpiece on which the subtractive manufacturing has been performed.
[FIG. 21] FIG. 21 is a cross-sectional view that illustrates the workpiece in which unnecessary substance is adhered to an exposed surface.
[FIG. 22] FIG. 22 is a cross-sectional view that illustrates one example of a positional relationship between a boundary and the beam spot in a first mode.
[FIG. 23] FIG. 23 is a cross-sectional view that illustrates one example of the positional relationship between the boundary and the beam spot in a second mode.
[FIG. 24] FIG. 24 is a block diagram that illustrates one example of a configuration of a processing system in a third modified example.
[FIG. 25] FIG. 25A is a cross-sectional view that illustrates the workpiece processed by the processing system in the first mode, and FIG. 25B is a cross-sectional view that illustrates the workpiece processed by the processing system in the second mode.

### Example Embodiments

Next, with reference to drawings, an example embodiment of a processing system and a processing method will be described. In the below described description, the example embodiment of the processing system and the processing method will be described by using a processing system SYS that is configured to process a workpiece W, which is one specific example of an object, by using processing light EL, which is one specific example of an energy beam. However, the present invention is not limited to the below described embodiment.

Moreover, in the below described description, a positional relationship of various components that constitute the processing system SYS will be described by using an XYZ rectangular coordinate system that is defined by an X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. An XY plane may be a horizontal direction.

### (1) Configuration of Processing System SYS

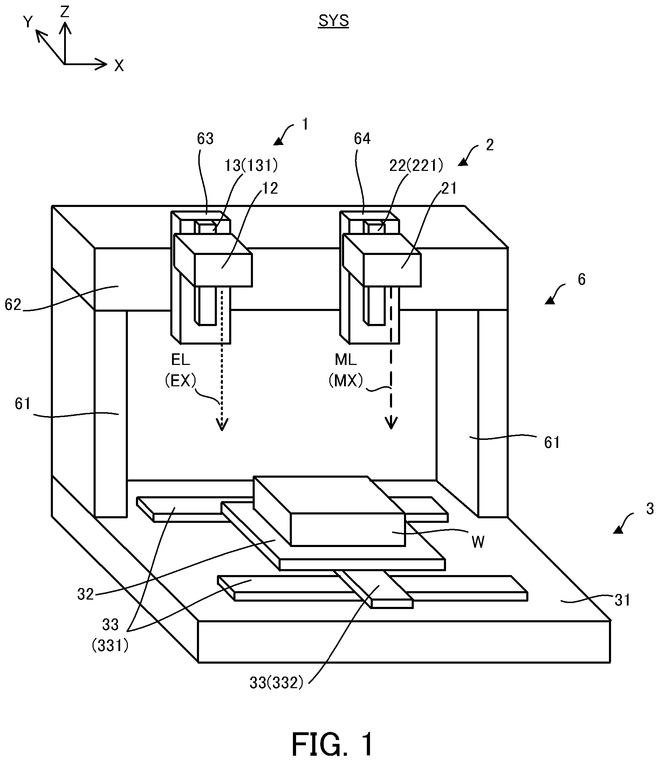

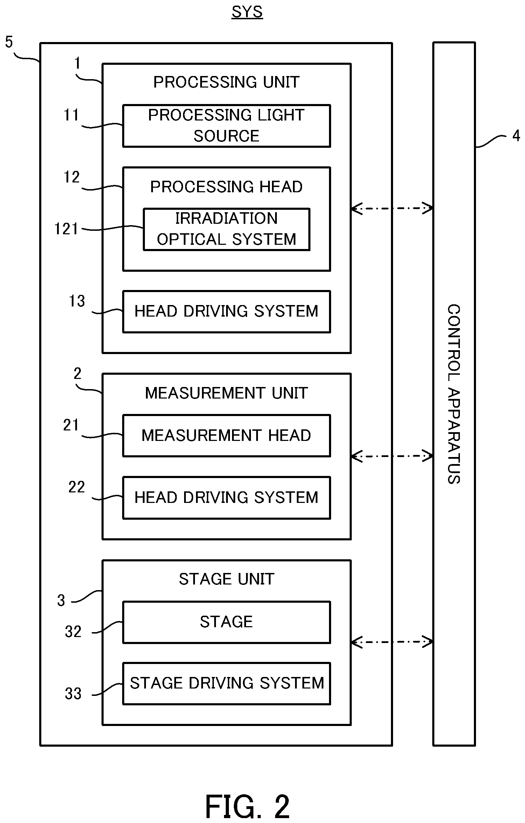

Firstly, with reference to FIG. 1 and FIG. 2, a configuration of the processing system SYS in the present example embodiment will be described. FIG. 1 is a perspective view that schematically illustrates an exterior appearance of the processing system SYS in the present example embodiment. FIG. 2 is a block diagram that illustrates the configuration of the processing system SYS in the present example embodiment.

As illustrated in FIG. 1 and FIG. 2, the processing system SYS includes a processing unit 1, a measurement unit 2, a stage unit 3 and a control unit 4. Incidentally, the processing unit 1 may be referred to as a processing apparatus. The measurement unit 2 may be referred to as a measurement apparatus. The stage unit 3 may be referred to as a stage apparatus. The control unit 4 may be referred to as a control apparatus.

The processing unit 1, the measurement unit 2, and the stage unit 3 are contained in an internal space of a housing 5. The internal space of the housing 5 may be purged with purge gas (namely, a gas) such as nitrogen gas, or may not be purged with the purge gas. The purge gas may be inert gas. The internal space of the housing 5 may be evacuated, or may not be evacuated. However, at least a part of the processing unit 1, the measurement unit 2, and the stage unit 3 may not be contained in the housing 5. The processing system SYS may not include the housing 5 that contains the processing unit 1, the measurement unit 2, and the stage unit 3. Alternatively, only an atmosphere around the workpiece W or only an atmosphere around the stage unit 3 may be purged with the purge gas.

The processing system SYS is configured to process the workpiece W under the control of the control unit 4. The workpiece W may be a metal, may be an alloy (for example, a duralumin, and so on), may be a semiconductor (for example, a silicon), may be a resin, may be a composite material such as CFRP(Carbon Fiber Reinforced Plastic), may be a painting material (as one example a film of painting material that is coated on a base member), may be a glass or a ceramic, or may be an object that is made from any other material, for example.

The processing unit 1 irradiates the workpiece W with processing light EL in order to process the workpiece W. The processing light EL may be any type of light as long as the workpiece W can be processed by irradiating the workpiece W with it. In the present example embodiment, an example in which the processing light EL is laser light will be described. However, the processing light EL may be light that is different from the laser light. Furthermore, a wavelength of the processing light EL may be any wavelength as long as the workpiece W can be processed by irradiating the workpiece W with it. For example, the processing light EL may be visible light or may be invisible light (for example, at least one of infrared light, ultraviolet light, extreme ultraviolet light, and the like). The processing light EL may include pulsed light. Alternatively, the processing light EL may not include the pulsed light. In other words, the processing light EL may be continuous light.

The processing unit 1 performs a subtractive manufacturing on the workpiece W. Namely, the processing unit 1 performs the subtractive manufacturing for removing a part of the workpiece W. Furthermore, the processing unit 1 may perform, on the workpiece W, a processing that is different from the subtractive manufacturing. For example, the processing unit 1 may perform an additive manufacturing on the workpiece W. Namely, the processing unit 1 may perform the additive manufacturing for building a build object on the workpiece W. The processing unit 1 may perform a marking processing for forming a desired mark on a surface of the workpiece W. The processing unit 1 may perform a peening processing for change a characteristic of the surface of the workpiece W. The processing unit 1 may perform a peeling processing for peeling the surface of the workpiece W. The processing unit 1 may perform a welding processing for coupling one the workpiece W with another the workpiece W. The processing unit 1 may perform a cutting processing for cutting the workpiece W. The processing unit 1 may perform a planar processing (in other words, a remelting processing) for making the surface of the workpiece W be closer to a planar surface by melting the surface of the workpiece W and solidifying the melted surface.

In order to perform the subtractive manufacturing on the workpiece W, the processing unit 1 includes a processing light source 11, a processing head 12, and a head driving system 13.

The processing light source 11 generates the processing light EL. In a case where the processing light EL is the laser beam, the processing light source 11 may include a laser diode, for example. Furthermore, the processing light source 11 may be a light source configured to perform a pulse oscillation. In this case, the processing light source 11 is configured to generate the pulsed light as the processing light EL. Furthermore, the processing light source 11 may be a CW light source that generates the continuous waves (CW).

The processing head 12 processes the workpiece W by irradiating the workpiece W with the processing light EL emitted from the processing light source 11 under the control of the control unit 4. The processing head 12 performs the subtractive manufacturing on the workpiece W placed on a below-described stage 32. In this case, the processing head 12 may be positioned above the stage 32 on which the workpiece W is placed. For example, the processing head 12 may be attached to a gate-shaped support frame 6 positioned on a surface plate 31 of the stage unit 3. The support frame 6 may include a pair of leg members 61 projecting along the Z-axis direction from the surface plate 31 and a beam member 62 connecting the pair of leg members 61 through upper ends of the leg members 61. The beam member 62 may be positioned above the stage 32. The processing head 12 may be attached to the beam member 62. Incidentally, in an example illustrated in FIG. 1, the processing head 12 is attached to the beam member 62 through the below-described head driving system 13. In a case where the processing head 12 is positioned above the stage 32, the processing head 12 may irradiate the workpiece W with the processing light EL by emitting the processing light EL downwardly from the processing head 12. Namely, the processing head 12 may irradiate the workpiece W with the processing light EL propagating along the Z-axis direction by emitting the processing light EL propagating along the Z-axis direction. The processing head 12 may irradiate the workpiece W with the processing light EL whose propagating direction is the Z-axis direction by emitting the processing light EL whose propagating direction is the Z-axis direction.

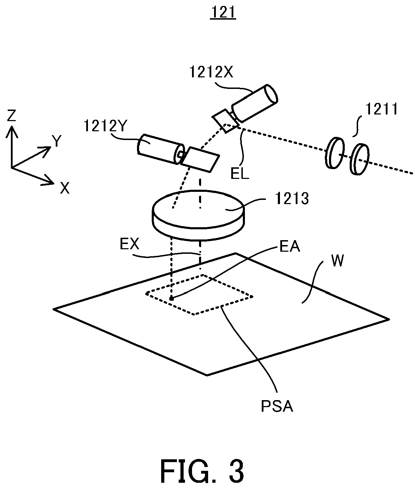

In order to irradiate the workpiece W with the processing light EL, the processing head 12 includes an irradiation optical system 121. Here, with reference to FIG. 3, the irradiation optical system 121 will be described. FIG. 3 is a perspective view that illustrates a configuration of the irradiation optical system 121.

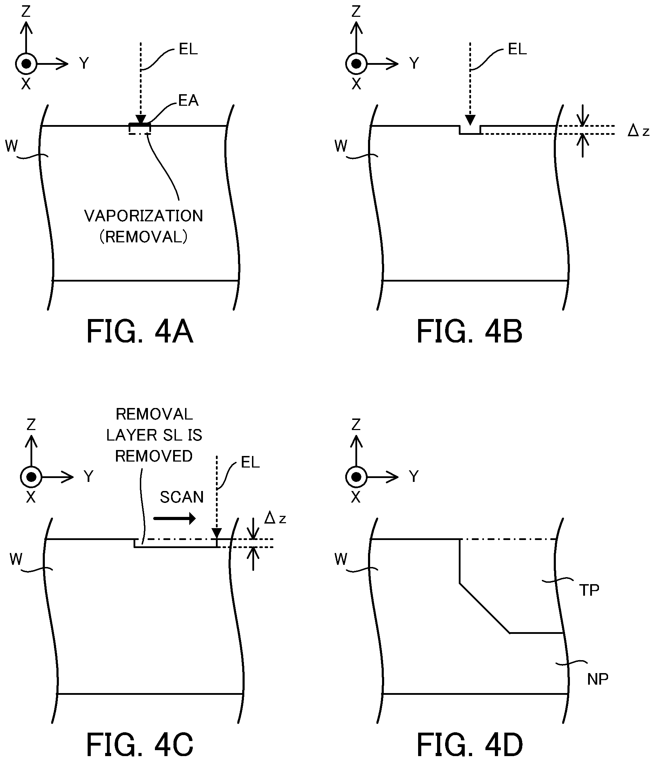

As illustrated in FIG. 4, the irradiation optical system 121 may include a focus change optical system 1211, a Galvano mirror 1212, and an fθ lens 1213, for example.

The focus change optical system 1211 is an optical member that is configured to change a light concentration position of the processing light EL (namely, a converged position of the processing light EL) along the propagating direction of the processing light EL. The focus change optical system 1211 may include a plurality of lenses aligned along the propagating direction of the processing light EL, for example. In this case, the light concentration position of the processing light EL may be changed by moving at least one of the plurality of lenses along its optical axis direction.

The focus change optical system 1211 may change a size (for example, a diameter) of a beam spot BS formed by the processing light EL on the surface of the workpiece W by change the light concentration position of the processing light EL relative to the surface of the workpiece W. In this case, the focus change optical system 1211 may be considered to serve as an optical system that is configured to change the size of the beam spot BS of the processing light EL.

The processing light EL that has passed through the focus change optical system 1211 enters the Galvano mirror 1212. The Galvano mirror 1212 changes an emission direction of the processing light EL from the Galvano mirror 1212 by deflecting the processing light EL (namely, change an emission angle of the processing light EL). When the emission direction of the processing light EL from the Galvano mirror 1212 is changed, a position from which the processing light EL is emitted from the processing head 12 is changed. When the position from which the processing light EL is emitted from the processing head 12 is changed, a position of a target irradiation area EA that is irradiated with the processing light EL on the surface of the workpiece W is changed. Namely, an irradiation position of the processing light EL on the surface of the workpiece W is changed.

The Galvano mirror 1212 includes a X sweeping mirror 1212X and a Y sweeping mirror 1212Y, for example. Each of the X sweeping mirror 1212X and the Y sweeping mirror 1212Y is a tilt angle variable mirror an angle of which is variable relative to an optical path of the processing light EL entering each mirror. The X sweeping mirror 1212X reflects the processing light EL to the Y sweeping mirror 1212Y. The X sweeping mirror 1212X is configured to swing or rotate around a rotational axis along the Y-axis direction. Due to the swing or the rotation of the X sweeping mirror 1212X, the surface of the workpiece W is swept with the processing light EL along the X-axis direction. Due to the swing or the rotation of the X sweeping mirror 1212X, the target irradiation area EA moves on the surface of the workpiece W along the X-axis direction. The Y sweeping mirror 1212Y reflects the processing light EL to the fθ lens 1213. The Y sweeping mirror 1212Y is configured to swing or rotate around a rotational axis along the X-axis. Due to the swing or the rotation of the Y sweeping mirror 1212Y, the surface of the workpiece W is swept with the processing light EL along the Y-axis direction. Due to the swing or the rotation of the Y sweeping mirror 1212X, the target irradiation area EA moves on the surface of the workpiece W along the Y-axis direction.

The Galvano mirror 1212 allows a processing area PSA defined with respect to the processing head 12 to be swept with the processing light EL. Namely, the Galvano mirror 1212 allows the target irradiation area EA to move in the processing area PSA defined with respect to the processing head 12. Note that the processing area PSA indicates an area (in other words, a range) in which the subtractive manufacturing is performed by the processing head 12 in a state where a positional relationship between the processing head 12 and the workpiece W is fixed (namely, is not changed). Typically, the processing area PSA is set to be an area that is same as or narrower than a swept range of the processing light EL that is deflected by the Galvano mirror 1212 in a state where the positional relationship between the processing head 12 and the workpiece W is fixed. Furthermore, the processing area PSA (the target irradiation area EA) is relatively movable on the surface of the workpiece W by the below-described head driving system 13 moving the processing head 12 and / or a below-described stage driving system 33 moving the stage 32.

Incidentally, an operation for changing the irradiation position of the processing light EL on the surface of the workpiece W by using the Galvano mirror 1212 may be considered to be equivalent to an operation for changing a positional relationship between the processing light EL on the surface of the workpiece W and the workpiece W. In this case, the Galvano mirror 1212 may be referred to as a position change apparatus.

The fθ lens 1213 is an optical system for emitting the processing light EL from the Galvano mirror 1212 toward the workpiece W. Especially, the fθ lens 1213 is an optical element that is configured to condense the processing light EL from the Galvano mirror 1212 on a condensing plane. Therefore, the fθ lens 1213 may be referred to as a condensing optical system or an objective optical system. The condensing plane of the fθ lens 1213 may be set on the surface of the workpiece W, for example. The condensing plane of the fθ lens 1213 may be set on a plane that is away from the surface of the workpiece W along a direction along an optical axis EX of the fθ lens 1213.

Incidentally, at least one of the X sweeping mirror 1212X and Y sweeping mirror 1212Y of the Galvano mirror 1212 may be positioned at an entrance pupil position of the fθ lens 1213 that is the condensing optical system (the objective optical system). At least one of the X sweeping mirror 1212X and the Y sweeping mirror 1212Y may be positioned at a position that is conjugate with the entrance pupil position of the fθ lens 1213 that is the condensing optical system (the objective optical system). In a case where there are a plurality of sweeping mirrors of the Galvano mirror 1212, a relay optical system may be positioned between the sweeping mirrors in order to make the sweeping mirrors be conjugate with each other.

Again in FIG. 1 and FIG. 2, the head driving system 13 moves the processing head 12 along at least one of the X-axis direction, the Y-axis direction, the Z-axis direction, the θX direction, the θY direction, and the θZ direction under the control of the control unit 4. FIG. 1 illustrates an example in which the head driving system 13 moves the processing head 12 along the Z-axis direction. In this case, the head driving system 13 may include a Z slide member 131 extending along the Z-axis direction, for example. The Z slide member 131 is positioned at the support frame 6 that is positioned on the surface plate 31 through a vibration isolator. The Z slide member 131 is positioned at the beam member 62 through a support member 63 that extends along the Z-axis direction, for example. The processing head 12 is connected to the Z slide member 131 so as to be movable along the Z slide member 131.

When the processing head 12 moves, a positional relationship between the processing head 12 and the below-described stage 32 changes. Furthermore, when the processing head 12 moves, a positional relationship between the processing head 12 and the workpiece W placed on the stage 32 changes. Therefore, moving the processing head 12 may be considered to be equivalent to changing the positional relationship between the processing head 12 and each of the stage 32 and the workpiece W. Moreover, when the processing head 12 moves, the target irradiation area EA and the processing area PSA, which are irradiated with the processing light EL on the surface of the workpiece W, move relative to the surface of the workpiece W. Namely, the irradiation position of the processing light on the surface of the workpiece W is changed.

Incidentally, an operation for changing the irradiation position of the processing light EL on the surface of the workpiece W by using the head driving system 13 may be considered to be equivalent to an operation for changing the positional relationship between the processing light EL on the surface of the workpiece W and the workpiece W. In this case, the head driving system 13 may be referred to as a position change apparatus.

The measurement unit 2 is configured to measure a measurement target object under the control of the control unit 4. The measurement target object may include the workpiece W. Specifically, the measurement target object may include at least one of the workpiece W before the processing unit 1 performs the subtractive manufacturing thereon, the workpiece W that is in the process of the subtractive manufacturing performed by the processing unit 1, and the workpiece W on which the processing unit 1 has already performed the subtractive manufacturing. The measurement target object may include the stage 32 on which the workpiece W may be placed. The measurement target object may include any object placed on the stage 32.

In order to measure the measurement target object, the measurement unit 2 includes a measurement head 21 and a head driving system 22.

The measurement head 21 is configured to measure (in other words, is configured to measure) the measurement target object under the control of the control unit 4. Specifically, the measurement head 21 is configured to measure any characteristic of the measurement target object. A position of the measurement target object is one example of the characteristic of the measurement target object. A shape (for example, a two-dimensional shape or a three-dimensional shape) of the measurement target object is another example of the characteristic of the measurement target object. At least one of a reflectance of the measurement target object, a transmittance of the measurement target object, a surface roughness of the measurement target object, and so on is another example of the characteristic of the measurement target object.

The measurement head 21 may measure the measurement target object by using any measurement method. For example, the measurement head 21 may measure the measurement target object optically, electrically, magnetically, physically, chemically, or thermally. The measurement head 21 may measure the measurement target object without contacting the measurement target object. The measurement head 21 may measure the measurement target object by contacting the measurement target object.

In the present example embodiment, an example in which the measurement head 21 optically measures the measurement target object by irradiating the measurement target object with measurement light ML without contacting the measurement target object will be described. For example, the measurement head 21 may measure the measurement target object by using a light section method that projects the measurement light ML, which is a slit light, on the surface of the measurement target object and measures a shape of the projected slit light. For example, the measurement head 21 may measure the measurement target object by using a white light interference method that measures an interference pattern of the measurement light ML, which is white light through the measurement target object, and white light not through the measurement target object. For example, the measurement head 21 may measure the measurement target object by using at least one of a pattern projection method that projects the measurement light ML, which forms a light pattern on the surface of the measurement target object, and measures a shape of the projected pattern, and a time of flight method that performs an operation, which emits the measurement light ML to the surface of the measurement target object and measures a distance to the measurement target object based on an elapsed time until the emitted light returns, at plurality of positions on the measurement target object. The measurement head 21 may measure the measurement target object by using at least one of a moiré topography method ( specifically, a grid irradiation method or a grid projection method), a holography interference method, an auto collimation method, a stereo method, an astigmatism method, a critical angle method, a knife edge method, an interference measurement method and a confocal method.

The measurement head 21 may be positioned above the stage 32 on which the workpiece W is placed. Specifically, the measurement head 21 may be attached to the beam member 62 in the same manner as the processing head 12. Incidentally, in the example illustrated in FIG. 1, the measurement head 21 is attached to the beam member 62 through the head driving system 22. However, the measurement head 21 may be attached to a beam member that is different from the beam member 62 to which the processing head 12 is attached. In a case where the measurement head 21 is positioned above the stage 32, the measurement head 21 may measure the workpiece W from a position above the workpiece W. The measurement head 21 may measure the stage 32 from a position above the stage 32. In a case where the measurement head 21 is positioned above the stage 32, the measurement head 21 may irradiate the workpiece W with the measurement light ML by emitting the measurement light ML downwardly from the measurement head 21. Namely, the measurement head 21 may irradiate the workpiece W with the measurement light ML propagating along the Z-axis direction by emitting the measurement light ML propagating along the Z-axis direction. The measurement head 21 may irradiate the workpiece W with the measurement light ML whose propagating direction is the Z-axis direction by emitting the measurement light ML whose propagating direction is the Z-axis direction.

Incidentally, the measurement head 21 may include a plurality of measurement devices, each of which is configured to measure the measurement target object. The plurality of measurement devices may include at least two measurement devices whose measurement resolutions are different from each other (in other words, whose measurement accuracies are different from each other). The plurality of measurement devices may include at least two measurement devices whose sizes of measurement areas are different from each other. The plurality of measurement devices may include at least two measurement devices whose measurement methods are different from each other.

The head driving system 22 moves the measurement head 21 along at least one of the X-axis direction, the Y-axis direction, the Z-axis direction, the θX direction, the θY direction, and the θZ direction under the control of the control unit 4. FIG. 1 illustrates an example in which the head driving system 22 moves the measurement head 21 along the Z-axis direction. In this case, the head driving system 22 may include a Z slide member 221 extending along the Z-axis direction, for example. The Z slide member 221 is positioned at the support frame 6 that is positioned on the surface plate 31 through the vibration isolator. The Z slide member 221 is positioned at the beam member 62 through a support member 64 that extends along the Z-axis direction, for example. The measurement head 21 is connected to the Z slide member 221 so as to be movable along the Z slide member 221.

When the measurement head 21 moves, a positional relationship between the measurement head 21 and the below-described stage 32 changes. Furthermore, when the measurement head 21 moves, a positional relationship between the measurement head 21 and the workpiece W placed on the stage 32 changes. Therefore, moving the measurement head 21 may be considered to be equivalent to changing the positional relationship between the measurement head 21 and each of the stage 32 and the workpiece W.

Incidentally, in addition to or instead of the measurement head 21, the processing head 12 may include a measurement device that is configured to measure the measurement target object.

The stage unit 3 includes the surface plate 31, the stage 32, and the stage driving system 33.

The surface plate 31 is positioned on a bottom surface of the housing 5 (alternatively, a support surface such as a floor surface on which the housing 5 is placed). The stage 32 is placed on the surface plate 31. The non-illustrated vibration isolator that reduces a transmission of vibration from the surface plate 31 to the stage 32 may be positioned between the surface plate 31 and the bottom surface of the housing 5 or the support surface such as the floor surface on which the housing 5 is placed. Moreover, the above-described support frame 6 may be positioned on the surface plate 31. Incidentally, a leg member may be provided between the surface plate 31 and the bottom surface of the housing 5 (alternatively, the support surface such as the floor surface on which the housing 5 is placed). In this case, a vibration isolator may be positioned between the leg member and the surface plate 31 and / or between the leg members and the bottom surface (alternatively, the support surface).

The stage 32 is a placing apparatus on which the workpiece W is placed. The stage 32 may be configured to hold the workpiece W placed on the stage 32. In this case, the stage 32 may include at least one of a mechanical chuck, an electrostatic chuck, and a vacuum suction chuck to hold the workpiece W. Alternatively, the stage 32 may not be configured to hold the workpiece W placed on the stage 32. In this case, the workpiece W may be placed on the stage 32 without a clamp.

The stage driving system 33 moves the stage 32 under the control of the control unit 4. For example, the stage driving system 33 may move the stage 32 along at least one of the X-axis direction, the Y-axis direction, the Z-axis direction, the θX direction, the θY direction, and the θZ direction under the control of the control unit 4.

In the example illustrated in FIG. 1, the stage driving system 33 moves the stage 32 along each of the X-axis and the Y-axis. Namely, in the example illustrated in FIG. 1, the stage driving system 33 moves the stage 32 along a direction that is along the XY plane intersecting the propagating direction of each of the processing light EL and the measurement light ML. In this case, the stage driving system 33 may include an X slide member 331 extending along the X-axis direction (in the example illustrated in FIG. 1, two X slide members 331 positioned to be parallel to each other) and a Y slide member 332 extending along the Y-axis direction (in the example illustrated in FIG. 1, one Y slide member 332), for example. The two X slide members 331 are positioned on the surface plate 31 so as to be aligned along the Y-axis direction. The Y slide member 332 is connected to the two X slide members 331 so as to be movable along the two X slide members 331. The stage 32 is connected to the Y slide member 332 so as to be movable along the Y slide member 332. Incidentally, the stage 32 may be supported to float on the surface plate 31 by an air bearing.

When the stage driving system 33 moves the stage 32, the positional relationship between each of the processing head 12 and measurement head 21 and each of the stage 32 and the workpiece W changes. Furthermore, when the stage driving system 33 moves the stage 32, each of the stage 32 and the workpiece W moves relative to each of the processing area PSA in which the processing head 12 performs the subtractive manufacturing and the measurement area in which the measurement head 21 performs the measurement.

The control unit 4 controls an operation of the processing system SYS. As one example, the control unit 4 may control the processing unit 1 and the stage unit 3 based on processing control data for controlling the processing system SYS to process the workpiece W. The processing control data may include processing path data. The processing path data may indicate a relative movement trajectory of the target irradiation area EA of the processing light EL on the surface of the workpiece W relative to the surface of the workpiece W. Namely, the processing path data may indicate a relative movement trajectory (so-called processing path) of the irradiation position of the processing light EL on the surface of the workpiece W relative to the surface of the workpiece W. As another example, the control unit 4 may control the measurement unit 2 and the stage unit 3 based on measurement control data for controlling the processing system SYS to measure the measurement target object.

The control unit 4 may include a calculation apparatus and a storage apparatus. The calculation apparatus may include at least one of a CPU (Central Processing Unit) and a GPU (Graphic Processing Unit), for example. The storage apparatus may include a memory, for example. The control unit 4 serves as an apparatus for controlling the operation of the processing system SYS by means of the calculation apparatus executing a computer program. The computer program is a computer program that allows the calculation apparatus to execute (namely, to perform) a below-described operation that should be executed by the control unit 4. Namely, the computer program is a computer program that allows the control unit 4 to function so as to make the processing system SYS perform the below-described operation. The computer program executed by the calculation apparatus may be recorded in the storage apparatus (namely, a recording medium) of the control unit 4, or may be recorded in any recording medium (for example, a hard disk or a semiconductor memory) that is built in the control unit 4 or that is attachable to the control unit 4. Alternatively, the calculation apparatus may download the computer program that should be executed from an apparatus positioned at the outside of the control unit 4 through a network interface.

The control unit 4 may not be positioned in the processing system SYS. For example, the control unit 4 may be positioned at the outside of the processing system SYS as a server or the like. For example, the control unit 4 may be positioned as a computer (for example, a laptop computer) that is connectable to the processing system SYS. For example, the control unit 4 may be positioned as a computer (for example, a laptop computer) that is positioned in the vicinity of the processing system SYS. In this case, the control unit 4 may be connected to the processing system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 4 and the processing system SYS may be configured to transmit and receive various information through the network. Moreover, the control unit 4 may be configured to transmit information such as a command and a control parameter to the processing system SYS through the network. The processing system SYS may include a reception apparatus that is configured to receive the information such as the command and the control parameter from the control unit 4 through the network. Alternatively, a first control apparatus that is configured to perform a part of the processing performed by the control unit 4 may be positioned in the processing system SYS and a second control apparatus that is configured to perform another part of the processing performed by the control unit 4 may be positioned at an outside of the processing system SYS.

An arithmetic model that is buildable by machine learning may be implemented in the control unit 4 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 4 may control the operation of the processing system SYS by using the arithmetic model. Namely, an operation for controlling the operation of the processing system SYS may include an operation for controlling the operation of the processing system SYS by using the arithmetic model. Note that the arithmetic model that has been built by off-line machine learning using training data may be implemented in the control unit 4. Moreover, the arithmetic model implemented in the control unit 4 may be updated by online machine learning on the control unit 4. Alternatively, the control unit 4 may control the operation of the processing system SYS by using the arithmetic model implemented in an apparatus positioned at an outside of the control unit 4 (namely, an apparatus positioned at an outside of the processing system SYS), in addition to or instead of the arithmetic model implemented in the control unit 4.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 4. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control unit 4 by means of the control unit 4 (namely, a computer) executing the computer program, may be realized by a hardware such as a predetermined gate array (a FPGA, an ASIC) of the control unit 4, or may be realized in a form in which the logical process block and a partial hardware module that realizes an partial element of the hardware are combined.

### (2) Processing of Workpiece performed by Processing System SYS

Next, the processing of the workpiece W performed by the processing system SYS will be described.

### (2-1) Overview of Subtractive Manufacturing

As described above, the processing system SYS performs the subtractive manufacturing for removing a part of the workpiece W by irradiating the workpiece W with the processing light EL. Therefore, first, with reference to FIG. 4A to FIG. 4C, an overview of the subtractive manufacturing using the processing light EL will be described. Each of FIG. 4A to FIG. 4C is a cross-sectional view that illustrates an aspect of the subtractive manufacturing performed on the workpiece W.

As illustrated in FIG. 4A, the processing system SYS irradiates the target irradiation area EA set (alternatively, formed) on the surface of the workpiece W with the processing light EL. When the target irradiation area EA is irradiated with the processing light EL, an energy of the processing light EL is transmitted to an energy transmitted part that includes a part of the workpiece overlapping with the target irradiation area EA and a part of the workpiece W in vicinity of the target irradiation area EA. In the present example embodiment, the processing system SYS may process the workpiece W by using a principle of non-thermal processing (for example, an ablation processing). Namely, the processing system SYS may perform the non-thermal processing (for example, the ablation processing) on the workpiece W. For example, in a case where the light whose photon density (in other words, fluence) is high is used as the processing light EL, the material of the workpiece W included in the energy transmitted part instantly evaporates and spatters. Namely, the material of the workpiece W included in the energy transmitted part evaporates and spatters within a time sufficiently shorter than a thermal diffusion time of the workpiece W. In this case, the material of the workpiece W included in the energy transmitted part may be released from the workpiece W as at least one of ion, atom, radical, molecule, cluster, and solid piece.

In a case where the non-thermal processing is performed, the processing light EL may include the pulsed light the ON time of which is equal to or shorter than pico-seconds or femto-seconds. Namely, the processing light EL may include the pulsed light a pulse width of which is equal to or shorter than pico-seconds or femto-seconds. In a case where the pulsed light the ON time of which is equal to or shorter than pico-seconds or femto-seconds is used as the processing light EL, the material of the workpiece W included in the energy transmitted part may sublimate without going through a molten state.

As a result, the target irradiation area EA and a part adjacent to the target irradiation area EA of the workpiece W are removed. Namely, as illustrated in FIG. 4B, a concave part (in other words, a groove), whose depth corresponds to a unit processing amount Δz caused by the processing light EL, is formed on the surface of the workpiece W. In a case where the workpiece W is processed by using the principle of the non-thermal processing in this manner, the processing system SYS can process the workpiece W while reducing an influence on the workpiece W due to a heat caused by the energy of the processing light EL as much as possible.

Here, in a case where the processing light EL is the pulsed light, the unit processing amount Δz may be a depth by which the workpiece W is removed when the workpiece W is irradiated with the processing light EL having a unit number of pulse. The unit number of pulse may be 1 or may be a number that is equal to or larger than 1. In a case where the processing light EL is the continuous light, the unit processing amount Δz may be a processed amount (a removed depth) of the workpiece W when the workpiece W is irradiated with the processing light EL having a unit energy for a unit time.

Alternatively, the processing system SYS may perform the subtractive manufacturing of the workpiece W by using a principle of so-called thermal processing, in addition to or instead of the principle of the non-thermal processing. In a case where the subtractive manufacturing of the workpiece W is performed by using the principle of the thermal processing, the processing light EL may include the pulsed light the ON time of which is equal to or longer than milli-seconds or nano-seconds, or the continuous light. Namely, the processing light EL may include the pulsed light the pulse width of which is equal to or longer than milli-seconds or nano-seconds, or the continuous light. In this case, when the heat caused by the energy of the processing light EL is transmitted to the energy transmitted part, the material of the workpiece W included in the energy transmitted part is melted due to the heat caused by the energy of the processing light EL. The melted material spatters as liquid drop. Alternatively, the melted material evaporates due to the heat caused by the energy of the processing light EL. As a result, the target irradiation area EA and a part that is in vicinity of the target irradiation area EA of the workpiece W is removed. Namely, as illustrated in FIG. 4B, a concave part (in other words, a groove part), whose depth corresponds to the unit processing amount Δz caused by the processing light EL, is formed on the surface of the workpiece W.

The processing system SYS moves the target irradiation area EA on the surface of the workpiece W along the processing path indicated by the processing path data by using the above-described Galvano mirror 1212. Namely, the processing system SYS scans the surface of the workpiece W with the processing light EL. The processing system SYS scans the surface of the workpiece W with the processing light EL along a scanning direction that intersects the propagating direction of the processing light EL. Furthermore, the processing system SYS may move the target irradiation area EA on the surface of the workpiece W along the processing path indicated by the processing path data by moving the processing head 12 using the above-described head driving system 13 and / or moving the stage 32 using the above-described stage driving system 33, if necessary. As a result, as illustrated in FIG. 4C, the surface of the workpiece W is removed at least partially along a scanning trajectory of the processing light EL (namely, a movement trajectory of the target irradiation area EA). Therefore, the processing system SYS may appropriately remove a part of the workpiece W on which the subtractive manufacturing should be performed by scanning the surface of the workpiece W with the processing light EL along a desired scanning trajectory corresponding to an area on which the subtractive manufacturing should be performed. The processing system SYS may appropriately remove the part of the workpiece W on which the subtractive manufacturing should be performed by scanning the surface of the workpiece W with the processing light EL along the desired scanning trajectory (namely, the processing path indicated by the processing path data) corresponding to the area on which the subtractive manufacturing should be performed. The processing system SYS may remove a removal layer SL, which has a thickness corresponding to the unit processing amount Δz and which is the part on which the subtractive manufacturing should be performed, from the workpiece W by scanning the surface of the workpiece W with the processing light EL along the desired scanning trajectory corresponding to the area on which the subtractive manufacturing should be performed.

The processing system SYS may process the workpiece W so that a shape of the workpiece W becomes a desired shape by repeating an operation for removing the removal layer SL having the thickness corresponding to the unit processing amount Δz. Namely, the processing system SYS may process the workpiece W so that the shape of the workpiece W becomes the desired shape by removing a plurality of removal layers SL. Specifically, as illustrated in FIG. 4D, the processing system SYS processes the workpiece W so as to remove a target processing part TP, which should be removed by the subtractive manufacturing, of the workpiece W under the control of the control unit 4. On the other hand, the processing system SYS processes the workpiece W so as not to remove a non-target processing part NP, which should not be removed by the subtractive manufacturing, of the workpiece W under the control of the control unit 4.

As a result, as illustrated in FIG. 4D, the target processing part TP is removed from the workpiece W, and the non-target processing part NP of the workpiece W remains. In this case, the processing system SYS may process the workpiece W so that a shape (for example, a three-dimensional shape) of the remaining non-target processing part NP becomes a target shape under the control of the control unit 4.

### (2-2) Wall Forming Operation using Subtractive Manufacturing

In the present example embodiment, the processing system SYS may perform a wall forming operation for forming a wall part WP with a wall shape on a part of the workpiece W by performing the above-described subtractive manufacturing.

### (2-2-1) Overview of Wall Part WP

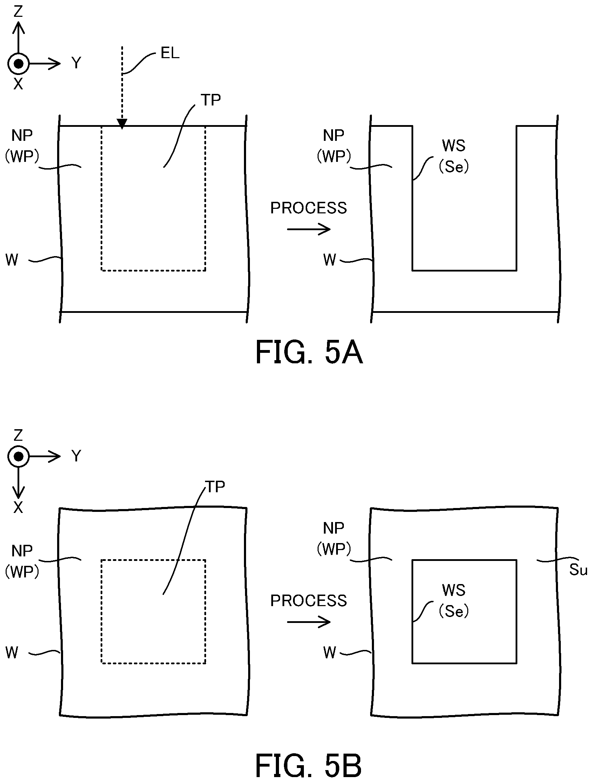

First, with reference to FIG. 5A to FIG. 5B, the wall part WP will be described. FIG. 5A is a cross-sectional view that illustrates the workpiece W from which the target processing part TP is not removed and the workpiece W from which the target processing part TP has been removed, and FIG. 5B is a top view that illustrates the workpiece W from which the target processing part TP is not removed and the workpiece W from which the target processing part TP has been removed.

As illustrated in FIG. 5A and FIG. 5B, the processing system SYS may process the workpiece W so that at least a part of the non-target processing part NP, which remains after the target processing part TP is removed, forms the wall part WP. In an example illustrated in FIG. 5A and FIG. 5B, the processing system SYS processes the workpiece W so that at least a part of the non-target processing part NP forms the wall part WP that surrounds a depression, which is formed in the workpiece W by removing the target processing part TP, from all sides.

The wall part WP may extend in the propagating direction of the processing light EL. Namely, the wall part WP may include a structure that extends along the propagating direction of the processing light EL. In the present example embodiment, the propagating direction of the processing light EL is the Z-axis direction as described above. In this case, the wall part WP may extend along the Z-axis direction. Namely, the wall part WP may include a structure that extends along the Z-axis direction.

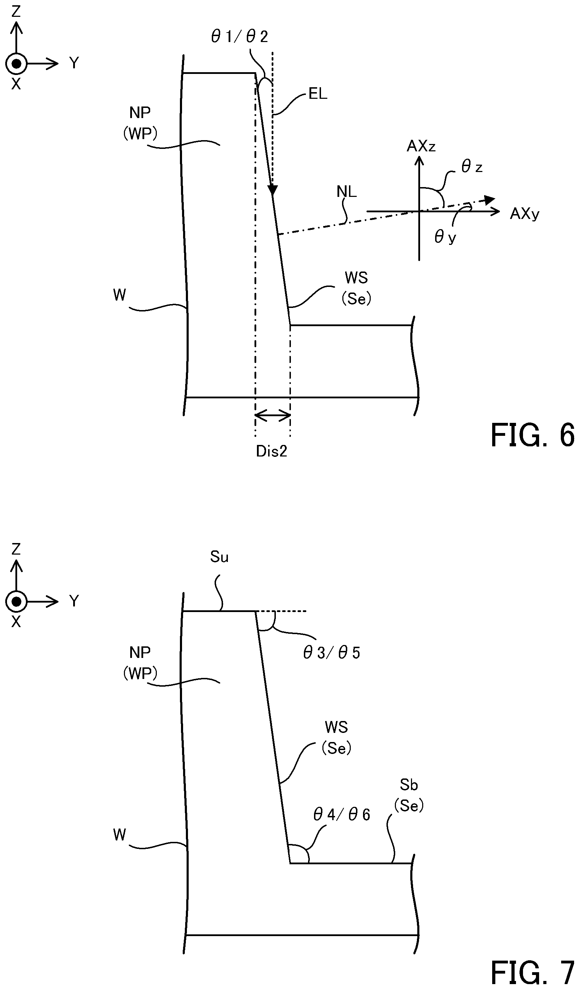

The wall part WP (for example, at least a part of the wall part WP) may be approximately parallel to the propagating direction of the processing light EL. Namely, the wall part WP may include a structure that is approximately parallel to the propagating direction of the processing light EL. A state where "the wall part WP is approximately parallel to the propagating direction of the processing light EL" may include a state where "the wall part WP is literally completely parallel to the propagating direction of the processing light EL". Moreover, the state where "the wall part WP is approximately parallel to the propagating direction of the processing light EL" may include a state where "the wall part WP is not completely parallel to the propagating direction of the processing light EL, but the wall part WP can be considered to be parallel to the propagating direction of the processing light EL". A state where "the wall part WP can be considered to be parallel to the propagating direction of the processing light EL" may include a state where "an angle θ1 between the wall part WP and the propagating direction of the processing light EL is equal to a first predetermined angle or smaller than the first predetermined angle" as illustrated in FIG. 6 that is a cross-sectional view illustrating the enlarged wall part WP. The first predetermined angle may be an angle that is equal to or smaller than 12 degrees. The first predetermined angle may be an angle that is equal to or smaller than 8 degrees. Incidentally, the state where "the wall part WP is completely parallel to the propagating direction of the processing light EL" may mean a state where "the angle θ1 between the wall part WP and the propagating direction of the processing light EL is 0 degrees". The angle θ1 between the wall part WP and the propagating direction of the processing light EL may mean ab angle between the wall part WP and an axis along the propagating direction of the processing light EL.

The wall part WP may include a wall surface WS that extends along the propagating direction of the processing light EL. Namely, the wall part WP may include a structure that includes the wall surface WS extending along the propagating direction of the processing light EL. As described above, in the present example embodiment, the propagating direction of the processing light EL is the Z-axis direction. In this case, the wall part WP may include the wall surface WS that extends along the Z-axis direction. Namely, the wall part WP may include a structure that includes the wall surface WS extending along the Z-axis direction.

At least a part of the wall surface WS may be an exposed surface Se that is exposed by removing the target processing part TP from the workpiece W. Namely, at least a part of the wall surface WS may be the exposed surface Se that is not visible from the outside of the workpiece W before the target processing part TP is removed from the workpiece W. At least a part of the wall surface WS may be an exposed surface Se that is visible from the outside of the workpiece W after the target processing part TP is removed from the workpiece W.

The wall surface WS (for example, at least a part of the wall surface WS) may be approximately parallel to the propagating direction of the processing light EL. Namely, the wall surface WS may include a surface that is approximately parallel to the propagating direction of the processing light EL. Incidentally, a state where "the wall surface WS is approximately parallel to the propagating direction of the processing light EL" may include a state where "the wall surface WS is literally completely parallel to the propagating direction of the processing light EL". Moreover, the state where "the wall surface WS is approximately parallel to the propagating direction of the processing light EL" may include a state where "the wall surface WS is not completely parallel to the propagating direction of the processing light EL, but the wall surface WS can be considered to be parallel to the propagating direction of the processing light EL". A state where "the wall surface WS can be considered to be parallel to the propagating direction of the processing light EL" may include a state where "an angle θ2 between the wall surface WS and the propagating direction of the processing light EL is equal to a second predetermined angle or smaller than the second predetermined angle" as illustrated in FIG. 6 that is the cross-sectional view illustrating the enlarged wall surface WS. The second predetermined angle may be an angle that is equal to or smaller than 12 degrees. The second predetermined angle may be an angle that is equal to or smaller than 8 degrees. Incidentally, the state where "the wall surface WS is completely parallel to the propagating direction of the processing light EL" may mean a state where "the angle θ2 between the wall surface WS and the propagating direction of the processing light EL is 0 degrees".

Incidentally, as illustrated in FIG. 2, the "angle θ2 between the wall surface WS and the propagating direction of the processing light EL" may be considered to be equivalent to the "angle θ1 between the wall part WP and the propagating direction of the processing light EL". In this case, the state where "the wall part WP is approximately parallel to the propagating direction of the processing light EL" may be considered to be equivalent to the state where "the wall surface WS is approximately parallel to the propagating direction of the processing light EL". A state where "the wall part WP extends along the propagating direction of the processing light EL" may be considered to be equivalent to a state where "the wall surface WS is approximately parallel to the propagating direction of the processing light EL".

In a case where the wall surface WS extends along the propagating direction of the processing light EL, a normal NL of the wall surface WS may intersect the propagating direction of the processing light EL, as illustrated in FIG. 6 that is the cross-sectional view illustrating the enlarged wall surface WS. For example, the normal NL of the wall surface WS may intersect the Z-axis direction. In this case, as illustrated in FIG. 6, an angle θz between the normal of the wall surface WS and an axis AXz extending along the Z-axis direction may be larger than each of an angle between the normal of the wall surface WS and an axis extending along the X-axis direction and an angle θy between the normal of the wall surface WS and an axis AXy extending along the Y-axis direction. Incidentally, in FIG. 6, for the simplicity of drawings, an illustration of the axis extending along the X-axis and an illustration of the angle between the normal of the wall surface WS and the axis extending along the X-axis are omitted.

The wall part WP may satisfy a condition that an angle θ3 between an upper surface Su of the non-target processing part NP and the wall part WP is approximately 90 degrees, as illustrated in FIG. 7 that is a cross-sectional view illustrating the enlarged wall part WP. A state where "the angle θ3 is approximately 90 degrees" may include a state where "the angle θ3 is literally completely equal to 90 degrees". The state where "the angle θ3 is approximately 90 degrees" may include a state where "the angle θ3 is smaller than 90 degrees, but the angle θ3 can be considered to be 90 degrees". A state where "the angle θ3, which is smaller than 90 degrees, can be considered to be 90 degrees" may include a state where "the angle θ3 is larger than a third predetermined angle". The third predetermined angle may be an angle that is equal to or larger than 78 degrees. The third predetermined angle may be an angle that is equal to or larger than 82 degrees. Furthermore, the state where "the angle θ3 is approximately 90 degrees" may include a state where "the angle θ3 is larger than 90 degrees, but the angle θ3 can be considered to be 90 degrees". A state where "the angle θ3, which is larger than 90 degrees, can be considered to be 90 degrees" may include a state where "the angle θ3 is smaller than a fourth predetermined angle". The fourth predetermined angle may be an angle that is equal to or smaller than 102 degrees. The fourth predetermined angle may be an angle that is equal to or smaller than 98 degrees.

Incidentally, the upper surface Su of the non-target processing part NP may be a surface facing upwardly (for example, toward the +Z side). The upper surface Su of the non-target processing part NP may be an upper part of a surface of the non-target processing part NP. The upper part of the surface of the non-target processing part NP may be a surface that is positioned above the other surface of the surface of the non-target processing part NP. Especially, the upper surface Su of the non-target processing part NP may be a surface that is connected to an upper end (for example, an end at the +Z side end) of the wall part WP. The upper surface Su of the non-target processing part NP may include a surface that is exposed before the target processing part TP is removed from the workpiece W.

The wall part WP may satisfy a condition that an angle θ4 between a bottom surface Sb of the non-target processing part NP and the wall part WP is approximately 90 degrees, as illustrated in FIG. 7 that is the cross-sectional view illustrating the enlarged wall part WP. A state where "the angle θ4 is approximately 90 degrees" may include a state where "the angle θ4 is literally completely equal to 90 degrees". The state where "the angle θ4 is approximately 90 degrees" may include a state where "the angle θ4 is smaller than 90 degrees, but the angle θ4 can be considered to be 90 degrees". A state where "the angle θ4, which is smaller than 90 degrees, can be considered to be 90 degrees" may include a state where "the angle θ4 is larger than a fifth predetermined angle". The fifth predetermined angle may be an angle that is equal to or larger than 78 degrees. The fifth predetermined angle may be an angle that is equal to or larger than 82 degrees. Furthermore, the state where "the angle θ4 is approximately 90 degrees" may include a state where "the angle θ4 is larger than 90 degrees, but the angle θ4 can be considered to be 90 degrees". A state where "the angle θ4, which is larger than 90 degrees, can be considered to be 90 degrees" may include a state where "the angle θ4 is smaller than a sixth predetermined angle". The sixth predetermined angle may be an angle that is equal to or smaller than 102 degrees. The sixth predetermined angle may be an angle that is equal to or smaller than 98 degrees.

Incidentally, the bottom surface Sb of the non-target processing part NP may be a surface facing upwardly (for example, toward the +Z side). Especially, the bottom surface Sb of the non-target processing part NP may be a surface that is connected to a lower end (for example, an end at the -Z side end) of the wall part WP. The bottom surface Sb of the non-target processing part NP may include the exposed surface Se that is exposed by removing the target processing part TP from the workpiece W. The bottom surface Sb of the non-target processing part NP may include a surface that forms a bottom of a depression that is formed by removing the target processing part TP from the workpiece W.

The wall surface WS of the wall part WP may satisfy a condition that an angle θ5 between the upper surface Su of the non-target processing part NP and the wall surface WS is approximately 90 degrees, as illustrated in FIG. 7 that is the cross-sectional view illustrating the enlarged wall surface WS. A state where "the angle θ5 is approximately 90 degrees" may include a state where "the angle θ5 is literally completely equal to 90 degrees". The state where "the angle θ5 is approximately 90 degrees" may include a state where "the angle θ5 is smaller than 90 degrees, but the angle θ5 can be considered to be 90 degrees". A state where "the angle θ5, which is smaller than 90 degrees, can be considered to be 90 degrees" may include a state where "the angle θ5 is larger than a seventh predetermined angle". The seventh predetermined angle may be an angle that is equal to or larger than 78 degrees. The seventh predetermined angle may be an angle that is equal to or larger than 82 degrees. Furthermore, the state where "the angle θ5 is approximately 90 degrees" may include a state where "the angle θ5 is larger than 90 degrees, but the angle θ5 can be considered to be 90 degrees". A state where "the angle θ5, which is larger than 90 degrees, can be considered to be 90 degrees" may include a state where "the angle θ5 is smaller than an eighth predetermined angle". The eighth predetermined angle may be an angle that is equal to or smaller than 102 degrees. The eighth predetermined angle may be an angle that is equal to or smaller than 98 degrees. Incidentally, the above-described state where "the angle θ3 between the upper surface Su of the non-target processing part NP and the wall part WP is approximately 90 degrees" may be considered to be equivalent to the state where "the angle θ5 between the upper surface Su of the non-target processing part NP and the wall surface WS is approximately 90 degrees".

The wall surface WS may satisfy a condition that an angle θ6 between the bottom surface Sb of the non-target processing part NP and the wall surface WS is approximately 90 degrees, as illustrated in FIG. 7 that is the cross-sectional view illustrating the enlarged wall surface WS. A state where "the angle θ6 is approximately 90 degrees" may include a state where "the angle θ6 is literally completely equal to 90 degrees". The state where "the angle θ6 is approximately 90 degrees" may include a state where "the angle θ6 is smaller than 90 degrees, but the angle θ6 can be considered to be 90 degrees". A state where "the angle θ6, which is smaller than 90 degrees, can be considered to be 90 degrees" may include a state where "the angle θ6 is larger than a ninth predetermined angle". The ninth predetermined angle may be an angle that is equal to or larger than 78 degrees. The ninth predetermined angle may be an angle that is equal to or larger than 82 degrees. Furthermore, the state where "the angle θ6 is approximately 90 degrees" may include a state where "the angle θ6 is larger than 90 degrees, but the angle θ6 can be considered to be 90 degrees". A state where "the angle θ6, which is larger than 90 degrees, can be considered to be 90 degrees" may include a state where "the angle θ6 is smaller than a tenth predetermined angle". The tenth predetermined angle may be an angle that is equal to or smaller than 102 degrees. The tenth predetermined angle may be an angle that is equal to or smaller than 98 degrees. Incidentally, the above-described state where "the angle θ4 between the bottom surface Sb of the non-target processing part NP and the wall part WP is approximately 90 degrees" may be considered to be equivalent to the state where "the angle θ6 between the bottom surface SB of the non-target processing part NP and the wall surface WS is approximately 90 degrees".

### (2-2-1) Detail of Wall Forming Operation for Forming Wall Part WP

In order to form the above-described wall part WP, the processing system SYS may divide the target processing part TP into a first part WTP1 and a second part WTP2 under the control of the control unit 4. Namely, the processing system SYS may set a part of the target processing part TP to the first part WTP1 and set a remaining part of the target processing part TP to the second part WTP2 under the control of the control unit 4. Then, the processing system SYS remove the target processing part TP by performing, under the control of the control unit 4, a first subtractive manufacturing operation for removing at least a part of the first part WTP1 by irradiating at least a part of the first part WTP1 with the processing light EL and a second subtractive manufacturing operation for removing at least a part of the second part WTP2 by irradiating at least a part of the second part WTP2 with the processing light EL. Namely, the processing system SYS may form the wall part WP by performing the first subtractive manufacturing operation and the second subtractive manufacturing operation.

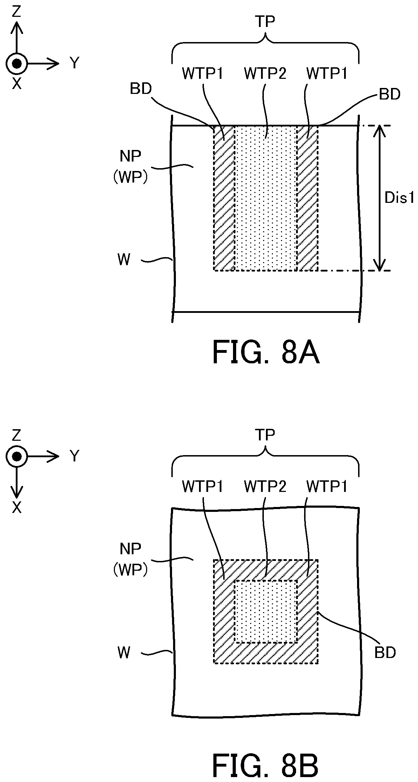

FIG. 8A and FIG. 8B illustrate examples of the first part WTP1 and the second part WTP2 that are set to form the wall part WP illustrated in FIG. 5. FIG. 8A is a cross-sectional view that illustrates examples of the first part WTP1 and the second part WTP2 of the target processing part TP, and FIG. 8B is a top view that illustrates examples of the first part WTP1 and the second part WTP2 of the target processing part TP.

As illustrated in FIG. 8A, the first part WTP1 may be adjacent to the second part WTP2. Especially, the first part WTP1 may be adjacent to the second part WTP2 along an adjacent direction that intersects the propagating direction of the processing light EL. As described above, in the present example embodiment, the propagating direction of the processing light EL is the Z-axis direction. In this case, the first part WTP1 may be adjacent to the second part WTP2 along the adjacent direction that intersects the Z direction. Namely, the first part WTP1 may be adjacent to the second part WTP2 along the adjacent direction that is a direction along the XY plane. In other words, the first part WTP1 may be adjacent to the second part WTP2 along the adjacent direction that includes a directional component along at least one of the X-axis direction and the Y-axis direction.

The first part WTP1 may be adjacent to the non-target processing part NP along the adjacent direction. In this case, a boundary between the first part WTP1 and the non-target processing part NP may form a boundary BD between the target processing part TP and the non-target processing part NP. Especially, the first part WTP1 may be adjacent to a part, which will be the wall part WP, of the non-target processing part NP along the adjacent direction. In this case, the boundary between the first part WTP1 and the non-target processing part NP (especially, the wall part WP) may form the boundary BD between the target processing part TP and the non-target processing part NP (especially, the wall part WP).

On the other hand, the second part WTP2 may not be adjacent to the non-target processing part NP along the adjacent direction. Especially, the second part WTP2 may not be adjacent to the part, which will be the wall part WP, of the non-target processing part NP along the adjacent direction. In this case, the second part WTP2 may be positioned at a position that is away from the non-target processing part NP along the adjacent direction more than the first part WTP1 is. Namely, a distance between the second part WTP2 and the non-target processing part NP along the adjacent direction may be longer than a distance between the first part WTP1 and the non-target processing part NP along the adjacent direction. Especially, the second part WTP2 may be positioned at a position that is away from the part, which will be the wall part WP, of the non-target processing part NP along the adjacent direction more than the first part WTP1 is. Namely, a distance between the second part WTP2 and the part of the non-target processing part NP that will be the wall part WP along the adjacent direction may be longer than a distance between the first part WTP1 and the part of the non-target processing part NP that will be the wall part WP along the adjacent direction. Incidentally, a part of the second part WTP2 may be adjacent to the non-target processing part NP.

The control unit 4 may determine a characteristic (for example, at least one of a position and a shape) of the wall part WP in the workpiece W based on shape data (for example, three-dimensional model data) indicating a three-dimensional shape of the workpiece W after processing, and determine the first part WTP1 based on the determined characteristic of the wall part WP. For example, the control unit 4 may determine, as the first part WTP1, a part of the workpiece W whose distance from the determined position of the wall part WP along at least one of the X-axis direction and the Y-axis direction is shorter than a predetermined distance.

The control unit 4 may determine the first part WTP1 based on a shape of the target processing part TP. For example, the control unit 4 may determine (in other words, set) a range of the first part WTP1 based on the shape of the target processing part TP.

Incidentally, once the first part WTP1 is determined, the second part WTP2 is automatically determined, because the second part WTP2 is the part of the workpiece W that excludes the first part WTP1. Therefore, an operation for determining the first part WTP1 may be considered to be equivalent to an operation for determining the second part WTP2.

Conversely, the control unit 4 may determine the second part WTP2 based on the shape of the target processing part TP. Even in this case, once the second part WTP2 is determined, the first part WTP1 is automatically determined. Namely, the control unit 4 may indirectly determine the first part WTP1 by determining the second part WTP2. Therefore, the operation for determining the second part WTP2 may be effectively included in the operation for determining the first part WTP1.

The shape of the target processing part TP may include a distance (in other words, a length or a depth) Dis1 (see FIG. 8A) of the target processing part TP in a direction along the wall part WP. Incidentally, the distance Dis1 of the target processing part TP in the direction along the wall part WP may mean a distance (a length or a depth) of the target processing part TP in the direction along the wall surface WS. In this case, the control unit 4 may determine at least one of the first part WTP1 and the second part WTP2 based on the distance Dis1 of the target processing part TP along the wall part WP. For example, the control unit 4 may determine at least one of the first part WTP1 and the second part WTP2 so that a width (specifically, a size along the adjacent direction) of the first part WTP1 becomes larger as the distance Dis1 becomes longer.

The shape of the target processing part TP may include the angle θ3 (see FIG. 7) between the upper surface Su of the non-target processing part NP and the wall part WP. In this case, the control unit 4 may determine at least one of the first part WTP1 and the second part WTP2 based on the angle θ3. For example, the control unit 4 may determine at least one of the first part WTP1 and the second part WTP2 so that the width (specifically, the size along the adjacent direction) of the first part WTP1 becomes larger as the angle θ3 becomes smaller.

Incidentally, the shape of the target processing part TP may include, in addition to or instead of the angle θ3, at least one of the angle θ1 (see FIG. 6) between the wall part WP and the propagating direction of the processing light EL, the angle θ2 (see FIG. 6) between the wall surface WS and the propagating direction of the processing light EL, the angle θ4 (see FIG. 6) between the bottom surface Sb of the non-target processing part NP and the wall part WP, the angle θ5 (see FIG. 7) between the upper surface Su of the non-target processing part NP and the wall surface WS, and the angle θ6 (see FIG. 7) between the bottom surface Sb of the non-target processing part NP and the wall surface WS. For example, the control unit 4 may determine at least one of the first part WTP1 and the second part WTP2 so that the width of the first part WTP1 becomes larger as the angle θ5 becomes smaller. For example, the control unit 4 may determine at least one of the first part WTP1 and the second part WTP2 so that the width of the first part WTP1 becomes larger as at least one of the angles θ1, θ2, θ4, and θ6 becomes larger.

The shape of the target processing part TP may include a distance Dis2 (see FIG. 6) between the upper end of the wall part WP and the lower end of the wall part WP in the adjacent direction. In this case, the control unit 4 may determine at least one of the first part WTP1 and the second part WTP2 based on the distance Dis2. For example, the control unit 4 may determine at least one of the first part WTP1 and the second part WTP2 so that the width (specifically, the size along the adjacent direction) of the first part WTP1 becomes larger as the distance Dis2 becomes larger.

Incidentally, the width of the first part WTP1 is typically tens of micrometers. As one example, the width of the first part WTP1 is from 20 micrometers to 30 micrometers. However, the width of the first part WTP1 is not limited to the sizes described as examples here.

Then, the control unit 4 may generate the processing control data for controlling the processing system SYS (especially, the processing unit 1 and the stage unit 3) to process the determined first part WTP1 and second part WTP2. Namely, the control unit 4 may generate the processing control data for controlling the processing system SYS (especially, the processing unit 1 and the stage unit 3) to process the target processing part TP that includes the determined first part WTP1 and second part WTP2. Then, the processing system SYS (especially, the processing unit 1 and the stage unit 3) may remove the target processing part TP based on the processing control data.

As described above, the processing control data may include processing path data. The processing path data may indicate the relative movement trajectory of the target irradiation area EA of the processing light EL on the surface of the workpiece W. Namely, the processing path data may indicate the relative movement trajectory (so-called processing path) of the irradiation position of the processing light EL on the surface of the workpiece W. In this case, the control unit 4 may generate the processing control data that indicates the relative movement trajectory (so-called processing path) of the irradiation position of the processing light EL, which is irradiated onto the workpiece W to process the determined first part WTP1 and second part WTP2, relative to the surface of the workpiece W.

The control unit 4 may generate the processing control data so that a processing condition for removing the first part WTP1 is different from a processing condition for removing the second part WTP2. For example, the control unit 4 may generate the processing control data so that the processing condition is a first processing condition in a case where the first part WTP1 is removed and the processing condition is a second processing condition that is different from the first condition in a case where the second part WTP2 is removed.

The processing condition may include a light condition related to the processing light EL that is irradiated onto the workpiece W. In this case, the control unit 4 may generate the processing control data so that the light condition of the processing light EL that is irradiated onto the first part WTP1 for removing the first part WTP1 is different from the light condition of the processing light EL that is irradiated onto the second part WTP2 for removing the second part WTP2. For example, the control unit 4 may generate the processing control data so that the light condition is a first light condition in a case where the first part WTP1 is removed and the light condition is a second light condition that is different from the first condition in a case where the second part WTP2 is removed. As a result, the processing system SYS may perform the first subtractive manufacturing operation for removing at least a part of the first part WTP1 by irradiating the first part WTP1 with the processing light EL having the first light condition. On the other hand, the processing system SYS may perform the second subtractive manufacturing operation for removing at least a part of the second part WTP2 by irradiating the second part WTP2 with the processing light EL having the second light condition.

The light condition related to the processing light EL may include a condition related to a fluence of the processing light EL. In this case, the control unit 4 may generate the processing control data so that the fluence of the processing light EL that is irradiated onto the first part WTP1 for removing the first part WTP1 is different from the fluence of the processing light EL that is irradiated onto the second part WTP2 for removing the second part WTP2. For example, the control unit 4 may generate the processing control data so that the workpiece W is irradiated with the processing light EL having a first fluence in a case where the first part WTP1 is removed and the workpiece W is irradiated with the processing light EL having a second fluence that is different from the first fluence in a case where the second part WTP2 is removed.

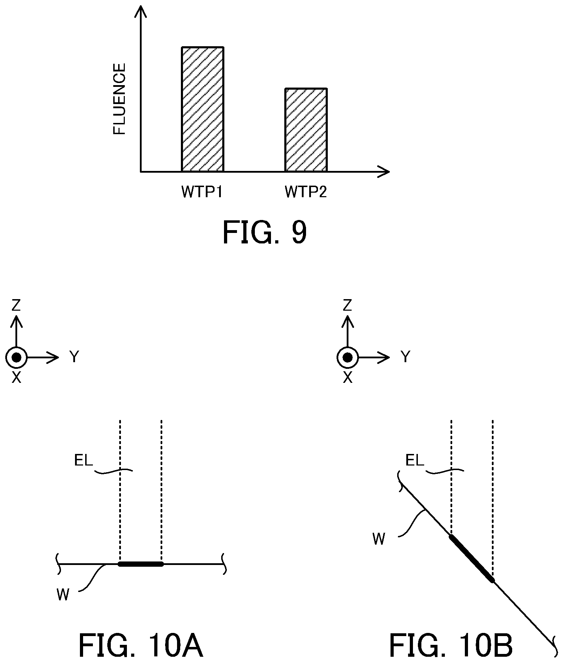

Especially in the present example embodiment, as illustrated in FIG. 9 that is a graph illustrating the fluence of the processing light EL, the control unit 4 may generate the processing control data so that the workpiece W is irradiated with the processing light EL having the first fluence in a case where the first part WTP1 is removed and the workpiece W is irradiated with the processing light EL having the second fluence that is lower than the first fluence in a case where the second part WTP2 is removed. As one example, the control unit 4 may generate the processing control data so that the first fluence is several to tens of times (for example, 20 times) of the second fluence. As a result, the processing system SYS may perform the first subtractive manufacturing operation for removing at least a part of the first part WTP1 by irradiating the first part WTP1 with the processing light EL having the first fluence. On the other hand, the processing system SYS may perform the second subtractive manufacturing operation for removing at least a part of the second part WTP2 by irradiating the second part WTP2 with the processing light EL having the second fluence that is lower than the first fluence.

Here, with reference to FIG. 10A and FIG. 10B,a reason why the fluence of the processing light EL that is irradiated onto the first part WTP1 is higher than the fluence of the processing light EL that is irradiated onto the second part WTP2 will be described. FIG. 10A illustrates the processing light EL entering the surface of the workpiece W at a first incident angle. On the other hand, FIG. 10B illustrates the processing light EL entering the surface of the workpiece W at a second incident angle that is larger than the first incident angle. As illustrated in FIG. 10A and FIG. 10B, an area that is actually irradiated with the processing light EL on the surface of the workpiece W is larger as the incident angle of the processing light EL is larger. Therefore, if the fluence of the processing light EL is fixed, an amount of an energy transferred from the processing light EL to the workpiece W per unit area or per unit time is smaller as the incident angle of the processing light EL is larger. Therefore, if the fluence of the processing light EL is fixed, there is a higher possibility that the amount of the energy transferred to the workpiece W is insufficient as the incident angle of the processing light EL is larger.

Here, in a case where the first part WTP1 that is adjacent to the wall part WP is processed, there is a higher possibility that the wall part WP (namely, the exposed surface Se that has been already exposed) along the propagating direction of the processing light EL is irradiated with the processing light EL, compared to a case where the second part WTP2 that is not adjacent to the wall part WP is processed. Therefore, in a case where the first part WTP1 that is adjacent to the wall part WP is processed, there is a higher possibility that the incident angle of the processing light EL is larger, compared to the case where the second part WTP2 that is not adjacent to the wall part WP is processed. As a result, in a case where the first part WTP1 that is adjacent to the wall part WP is processed, there is a higher possibility that the workpiece W is irradiated with the processing light EL in the state illustrated in FIG. 10B, compared to the case where the second part WTP2 that is not adjacent to the wall part WP is processed. Therefore, if the fluence of the processing light EL is fixed, there is a possibility that the amount of the energy transferred to the first part WTP1 per unit area or per unit time is smaller than the amount of the energy transferred to the second part WTP2 per unit area or per unit time. As a result, there is a possibility that a processed amount of the first part WTP1 is insufficient and an appropriate wall part WP is not formed. For example, there is a possibility that the processed amount of the first part WTP1 is insufficient and the wall part WP is unintentionally formed so that the angle θ3 (see FIG. 7) between the upper surface Su of the non-target processing part NP and the wall part WP is smaller than a desired angle. For example, there is a possibility that the processed amount of the first part WTP1 is insufficient and the wall part WP that is inclined with respect to the Z-axis direction (namely, that does not rise vertically) is unintentionally formed in a situation where the wall part WP that extends along the Z-axis direction (namely, that rises vertically) should be formed.

Therefore, in the present example embodiment, the processing system SYS allows the fluence of the processing light EL that is irradiated onto the first part WTP1 to be higher than the fluence of the processing light EL that is irradiated onto the second part WTP2. As a result, there is a lower possibility that the amount of the energy transferred to the first part WTP1 per unit area or per unit time is smaller than the amount of the energy transferred to the second part WTP2 per unit area or per unit time. As a result, there is a lower possibility that the processed amount of the first part WTP1 is insufficient. Therefore, the processing system SYS can process the workpiece W so as to form the appropriate wall part WP. For example, the processing system SYS can appropriately form the wall part WP so that the angle θ3 between the upper surface Su of the non-target processing part NP and the wall part WP is the desired angle. For example, the processing system SYS can appropriately form the wall part WP that extends along the Z-axis direction (namely, that rises vertically) in a situation where the wall part WP that extends along the Z-axis direction (namely, that rises vertically) should be formed.

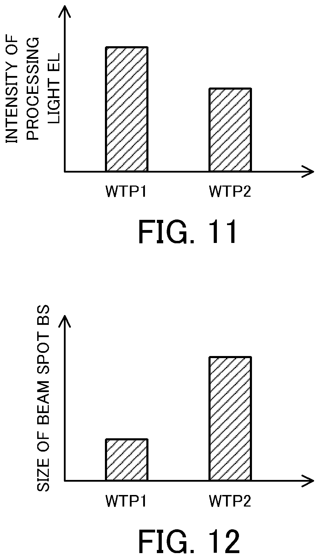

The processing system SYS may change the fluence of the processing light EL by controlling the processing light source 11. Specifically, the processing system SYS may change the fluence of the processing light EL by controlling the processing light source 11 to change an intensity of the processing light EL emitted from the processing light source 11. For example, as illustrated in FIG. 11 that is a graph illustrating the intensity of the processing light EL emitted from the processing light source 11, the processing system SYS may control the processing light source 11 so that the intensity of the processing light EL that is irradiated onto the first part WTP1 is higher than the intensity of the processing light EL that is irradiated onto the second part WTP2. As a result, the fluence of the processing light EL that is irradiated onto the first part WTP1 is higher than the fluence of the processing light EL that is irradiated onto the second part WTP2.

The processing system SYS may change the fluence of the processing light EL by controlling the focus change optical system 1211. Specifically, the processing system SYS may change the fluence of the processing light EL by controlling the focus change optical system 1211 to change the size (for example, the diameter) of the beam spot BS formed by the processing light EL on the surface of the workpiece W. For example, as illustrated in FIG. 12 that is a graph illustrating the size of the beam spot BS, the processing system SYS may control the focus change optical system 1211 so that the size of the beam spot BS of the processing light EL that is irradiated onto the first part WTP1 is smaller than the size of the beam spot BS of the processing light EL that is irradiated onto the second part WTP2. As a result, the fluence of the processing light EL that is irradiated onto the first part WTP1 is higher than the fluence of the processing light EL that is irradiated onto the second part WTP2.

The processing system SYS may change the fluence of the processing light EL by controlling the head driving system 13 that moves the processing head 12. For example, when the processing head 12 moves along the Z-axis, the size of the beam spot BS formed by the processing light EL on the surface of the workpiece W changes. Therefore, the processing system SYS may change the fluence of the processing light EL by moving the processing head 12 along the Z-axis using the head driving system 13 to change the size of the beam spot BS.

Incidentally, in an example illustrated in FIG. 12, it can be said that the size of the beam spot BS of the processing light EL that is irradiated onto the second part WTP2 is larger than the size of the beam spot BS of the processing light EL that is irradiated onto the first part WTP1. Here, a size of an area that is irradiated with the processing light EL on the workpiece W per unit time is larger as the size of the beam spot BS is larger. As a result, a throughput for processing the workpiece W is improved. Therefore, in the present example embodiment, the processing system SYS may prioritize improving throughput over forming the appropriate wall part WP in the second part WTP2 at which it is not necessary to form the wall part WP by allowing the size of the beam spot BS of the processing light EL that is irradiated onto the second part WTP2 at which it is not necessary to form the wall part WP to be larger than the size of the beam spot BS of the processing light EL that is irradiated onto the first part WTP1.

The light condition related to the processing light EL may include a condition related to an overlap rate of the processing light EL. The overlap rate of the processing light EL may mean an overlap rate between the beam spot BS of the processing light EL irradiated onto the workpiece W at one timing and the beam spot BS of the processing light EL irradiated onto the workpiece W at another timing subsequent to the first timing. In this case, the control unit 4 may generate the processing control data so that the overlap ratio of the processing light EL that is irradiated onto the first part WTP1 for removing the first part WTP1 is different from the overlap ratio of the processing light EL that is irradiated onto the second part WTP2 for removing the second part WTP2. For example, the control unit 4 may generate the processing control data so that the workpiece W is irradiated with the processing light EL whose overlap rate is set to a first rate in a case where the first part WTP1 is removed and the workpiece W is irradiated with the processing light EL whose overlap rate is set to a second rate that is different from the first rate in a case where the second part WTP2 is removed.

The light condition related to the processing light EL may include a condition related to an irradiation number of times of the processing light EL. The irradiation number of times of the processing light EL may mean the number of times by which a single area of the workpiece W is irradiated with the processing light EL. In this case, the control unit 4 may generate the processing control data so that the irradiation number of times of the processing light EL that is irradiated onto the first part WTP1 for removing the first part WTP1 is different from the irradiation number of times of the processing light EL that is irradiated onto the second part WTP2 for removing the second part WTP2. For example, the control unit 4 may generate the processing control data so that the irradiation number of times of the processing light EL is a predetermined first number in a case where the first part WTP1 is removed and the irradiation number of times of the processing light EL is a predetermined second number that is different from the first number in a case where the second part WTP2 is removed.

The control unit 4 may generate the processing control data based on a result of a test processing on a test workpiece (hereinafter, it is referred to as a "test workpiece"). For example, the processing system SYS may perform the test processing in a state where the processing condition is set to a predetermined test condition. As one example, the processing system SYS may perform the test processing in a state where the fluence of the processing light EL is set to a predetermined test fluence. As another example, the processing system SYS may perform the test processing in a state where the overlap of the processing light EL is set to a predetermined test overlap rate. As another example, the processing system SYS may perform the test processing in a state where the irradiation number of times of the processing light EL is set to a predetermined test number of times. Alternatively, for example, the processing system SYS may perform the test processing while changing the processing condition. As one example, the processing system SYS may perform the test processing while changing the fluence of the processing light EL. As another example, the processing system SYS may perform the test processing while changing the overlap rate of the processing light EL. The processing system SYS may perform the test processing while changing the irradiation number of times of the processing light EL. Then, the processing system SYS may measure a processed part (for example, a depth of the processed part) by the test processing by using the measurement unit 2. Then, the control unit 4 may generate the processing control data based on the measured result of the processed part by the test processing. For example, the control unit 4 may generate the processing control data so that the fluence of the processing light EL is a desired fluence based on the measured results of the processing marks from the test processing. For example, the control unit 4 may generate the processing control data the measured result of the processed part by the test processing so that the overlap rate of the processing light EL becomes the desired overlap rate. For example, the control unit 4 may generate the processing control data the measured result of the processed part by the test processing so that the irradiation number of times of the processing light EL is a desired number of times.

The control unit 4 may set the processing condition related to the processing light EL for performing the second subtractive manufacturing operation (namely, the processing light EL that is irradiated onto the second part WTP2) based on the measured result of the processed part by the test processing. Furthermore, the control unit 4 may set the processing light EL for performing the first subtractive manufacturing operation (namely, the processing light EL that is irradiated onto the first part WTP1) based on the processing condition related to the processing light EL for performing the second subtractive manufacturing operation. For example, the control unit 4 may set the fluence of the processing light EL for performing the second subtractive manufacturing operation (namely, the processing light EL that is irradiated onto the second part WTP2) based on the measured result of the processed part by the test processing. Furthermore, the control unit 4 may automatically set, as the fluence of the processing light EL for performing the first subtractive manufacturing operation (namely, the processing light EL that is irradiated onto the first part WTP1), a fluence that is higher than the fluence of the processing light EL for performing the second subtractive manufacturing operation.

The processing system SYS may remove at least a part of the target processing part TP by alternately repeating the first subtractive manufacturing operation for removing at least a part of the first part WTP1 and the second subtractive manufacturing operation for removing at least a part of the second part WTP2.

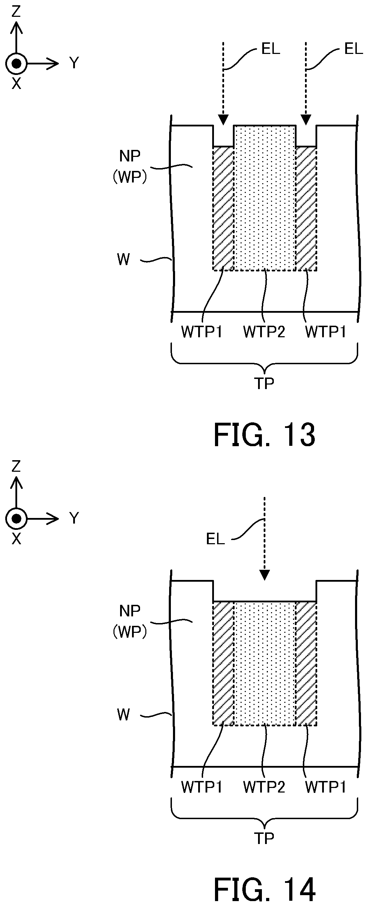

For example, as illustrated in FIG. 13, the processing system SYS may remove a part of the first part WTP1 by performing the first subtractive manufacturing operation. Specifically, the processing system SYS may remove a part of the first part WTP1 by scanning the surface of the first part WTP1 with the processing light EL. Namely, the processing system SYS may remove the removal layer SL that is a part of the first part WTP1. In this case, the processing system SYS may remove a single removal layer SL by a single first removal manufacturing operation. In this case, the processing system SYS may remove the single removal layer SL by scanning the first part WTP1 once in a direction that intersects the propagating direction of the processing light EL. Alternatively, the processing system SYS may remove a plurality of removal layers SL by the single first subtractive manufacturing operation. In this case, the processing system SYS may remove the plurality of removal layers SL by scanning the first part WTP1 a plurality of number of times in a direction that intersects the propagating direction of the processing light EL.

After a part of the first part WTP1 is removed, the processing system SYS may remove a part of the second part WTP2 by performing the second subtractive manufacturing operation, as illustrated in FIG. 14. Specifically, the processing system SYS may remove a part of the second part WTP2 by scanning the surface of the second part WTP2 with the processing light EL. Namely, the processing system SYS may remove the removal layer SL that is a part of the second part WTP2. In this case, the processing system SYS may remove a single removal layer SL by a single second subtractive manufacturing operation. In this case, the processing system SYS may remove the single removal layer SL by scanning the second part WTP2 once in a direction that intersects the propagating direction of the processing light EL. Alternatively, the processing system SYS may remove a plurality of removal layers SL by the single second removal manufacturing operation. In this case, the processing system SYS may remove the plurality of removal layers SL by scanning the second part WTP2 a plurality of number of times in a direction that intersects the propagating direction of the processing light EL.

The number of removal layers SL removed by the single first subtractive manufacturing operation may be the same as the number of removal layers SL removed by the single second subtractive manufacturing operation. For example, the processing system SYS may perform the first subtractive manufacturing operation for removing N (wherein, N is a variable number representing an integer that is larger than or equal to 1) removal layers SL that are a part of the first part WTP1, and then perform the second subtractive manufacturing operation for removing N removal layers SL that are a part of the second part WTP2. Namely, the processing system SYS may perform the first subtractive manufacturing operation that includes an operation for removing the removal layer SL, which is a part of the first part WTP1, by N number of times, and the second subtractive manufacturing operation that includes an operation for removing the removal layer SL, which is a part of the second part WTP2, by N number of times.

Alternatively, the number of removal layers SL removed by the single first subtractive manufacturing operation may be different from the number of removal layers SL removed by the single second subtractive manufacturing operation. For example, the processing system SYS may perform the first subtractive manufacturing operation for removing N removal layers SL that are a part of the first part WTP1, and then perform the second subtractive manufacturing operation for removing M (wherein, M is a variable number representing an integer that is different from the variable number N and that is larger than or equal to 1) removal layers SL that are a part of the second part WTP2. Namely, the processing system SYS may perform the first subtractive manufacturing operation that includes an operation for removing the removal layer SL, which is a part of the first part WTP1, by N number of times, and the second subtractive manufacturing operation that includes an operation for removing the removal layer SL, which is a part of the second part WTP2, by M number of times.

Here, as described above, the fluence of the processing light EL that is irradiated onto the first part WTP1 may be different from the fluence of the processing light EL that is irradiated onto the second part WTP2. Namely, the fluence of the processing light EL that is used by the first subtractive manufacturing operation may be different from the fluence that is used by the second subtractive manufacturing operation. In this case, the thickness (namely, the unit processing amount Δz illustrated in FIG. 4) of the removal layer SL removed by the first subtractive manufacturing operation is different from the thickness of the removal layer SL removed by the second subtractive manufacturing operation. In this case, the number of removal layers SL removed by the single first subtractive manufacturing operation may be different from the number of removal layers SL removed by the single second subtractive manufacturing operation. For example, the processing system SYS may perform the first and second subtractive manufacturing operations so that the total thickness of the N removal layers SL removed by the single first subtractive manufacturing operation is the same as the total thickness of the M removal layers SL removed by the single second subtractive manufacturing operation.

As one example, the fluence of the processing light EL that is irradiated onto the first part WTP1 may be higher than the fluence of the processing light EL that is irradiated onto the second part WTP2. Namely, the fluence of the processing light EL that is used by the first subtractive manufacturing operation may be higher than the fluence that is used by the second subtractive manufacturing operation. In this case, the thickness (namely, the unit processing amount Δz illustrated in FIG. 4) of the removal layer SL removed by the first subtractive manufacturing operation is thicker than the thickness of the removal layer SL removed by the second subtractive manufacturing operation. In this case, the number of removal layers SL removed by the single first subtractive manufacturing operation may be smaller than the number of removal layers SL removed by the single second subtractive manufacturing operation.

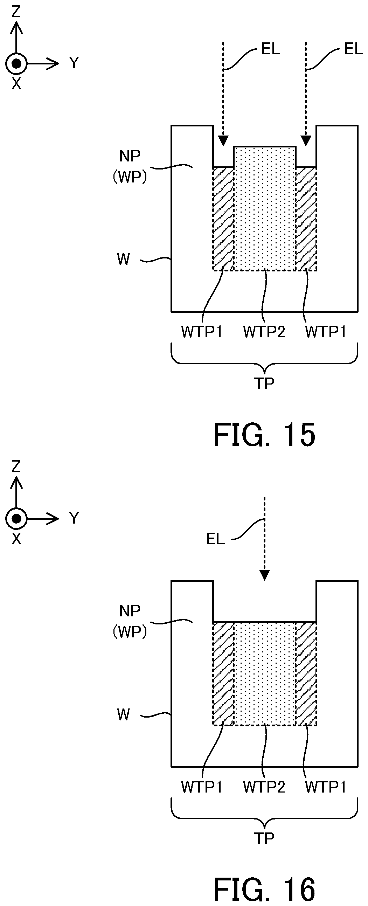

After a part of the second part WTP2 is removed, the processing system SYS may perform the first subtractive manufacturing operation again. Namely, as illustrated in FIG. 15, the processing system SYS may remove at least a part of the remaining first part WTP1 by performing the first subtractive manufacturing operation. Specifically, the processing system SYS may remove at least a part of the remaining first part WTP1 by scanning the surface of the remaining first part WTP1 with the processing light EL. Namely, the processing system SYS may remove the removal layer SL that is at least a part of the remaining first part WTP1.

After at least a part of the first part WTP1 is removed, the processing system SYS may perform the second subtractive manufacturing operation again. Namely, the processing system SYS may remove at least a part of the remaining second part WTP2 by performing the second subtractive manufacturing operation, as illustrated in FIG. 16. Specifically, the processing system SYS may remove at least a part of the remaining second part WTP2 by scanning the surface of the remaining second part WTP2 with the processing light EL. Namely, the processing system SYS may remove the removal layer SL that is a part of the remaining second part WTP2.

Then, the processing system SYS repeats the same operation until the removal of the first part WTP1 and the second part WTP2 is completed. Namely, the processing system SYS repeats the same operation until the removal of the target processing part TP is completed.

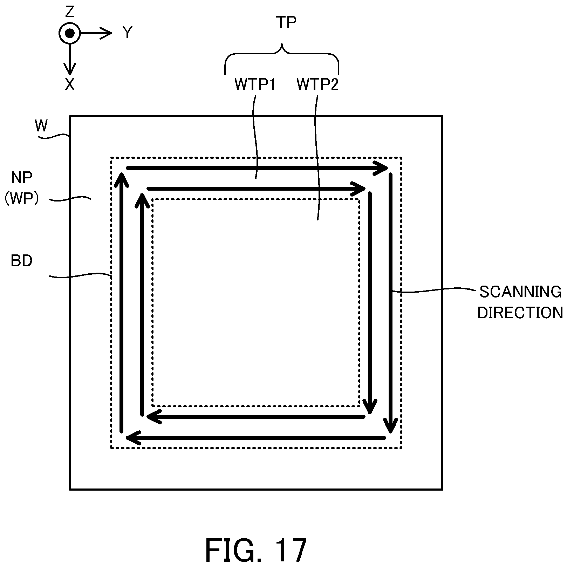

In at least a part of a period during which the first subtractive manufacturing operation for removing the first part WTP1 is performed, the processing system SYS may scan the first part WTP1 with the processing light EL so that the scanning direction of the processing light EL on the surface of the workpiece W is the same as a direction along which the boundary BD between the target processing part TP and the non-target processing part NP extends on the surface of the workpiece W, as illustrated in FIG. 17. In other words, the processing system SYS may scan the first part WTP1 with the processing light EL so that a positional relationship between the workpiece W and the irradiation position of the processing light EL is changed in the direction along which the boundary BD extends. In this case, the processing system SYS can process the workpiece W so as to form the appropriate wall part WP, compared to a case where the first part WTP1 is scanned with the processing light EL along a direction that is different from the direction along which the boundary BD extends. For example, the processing system SYS can appropriately form the wall part WP so that the angle θ3 (see FIG. 7) between the upper surface Su of the non-target processing part NP and the wall part WP is the desired angle. For example, the processing system SYS can appropriately form the wall part WP that extends along the Z-axis direction (namely, that rises vertically) in a situation where the wall part WP that extends along the Z-axis direction (namely, that rises vertically) should be formed.

Incidentally, the processing system SYS may control (for example, change) an open angle of the processing light EL so that the open angle of the processing light EL in a case where the first part WTP1 is irradiated with the processing light EL is different from the open angle of the processing light EL in a case where the second part WTP2 is irradiated with the processing light EL. Moreover, the processing system SYS may control (for example, change) the overlap ratio of the processing light EL so that the overlap ratio of the processing light EL in a case where the first part WTP1 is processed is different from the overlap ratio of the processing light EL in a case where the second part WTP2 is processed. The processing system SYS may control (for example, change) the size of the beam spot BS of the processing light EL so that the size of the beam spot BS of the processing light EL in a case where the first part WTP1 is processed is different from the size of the beam spot BS of the processing light EL in a case where the second part WTP2 is processed. The processing system SYS may control (for example, change) the scanning direction of the processing light EL so that the scanning direction of the processing light EL in a case where the first part WTP1 is processed is different from the scanning direction of the processing light EL in a case where the second part WTP2 is processed.

### (3) Technical Effect of Processing System SYS

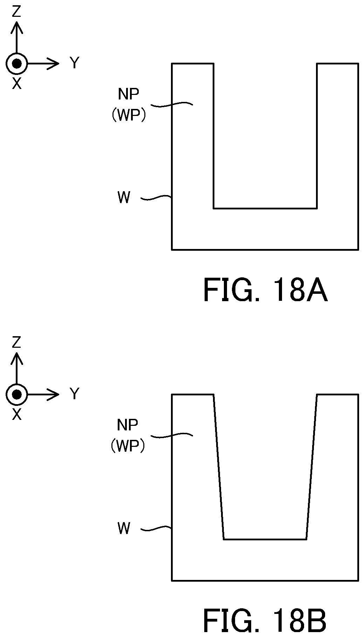

As described above, the processing system SYS in the present example embodiment performs the first subtractive manufacturing operation for removing at least a part of the first part WTP1 of the target processing part TP and the second subtractive manufacturing operation for removing at least a part of the second part WTP2 of the target processing part TP in order to remove the target processing part TP to form the wall part WP. Therefore, the processing system SYS can process the workpiece W so as to form the appropriate wall part WP, compared to a processing system in a first comparison example that removes the target processing part TP without dividing the target processing part TP into the first part WTP1 and the second part WTP2. For example, the processing system SYS can appropriately form the wall part WP so that the angle θ3 (see FIG. 7) between the upper surface Su of the non-target processing part NP and the wall part WP is the desired angle, as illustrated in FIG. 18A. For example, the processing system SYS can appropriately form the wall part WP that extends along the Z-axis direction (namely, that rises vertically) in a situation where the wall part WP that extends along the Z-axis direction (namely, that rises vertically) should be formed, as illustrated in FIG. 18A. There is a lower possibility that the processing system SYS forms the wall part WP that is inclined with respect to the Z-axis direction (namely, that does not rise vertically) as illustrated in FIG. 18B, in a situation where the wall part WP that extends along the Z-axis direction (namely, that rises vertically) should be formed as illustrated in FIG. 18A. Thus, the processing system SYS can process the workpiece W so as to form the appropriate wall part WP. Namely, the processing system SYS can remove the target processing part TP from the workpiece W so that the non-target processing part NP, which can appropriately serve as the wall part WP, remains.

Especially, the processing system SYS may set the fluence (namely, the processing condition) of the processing light EL used by the first subtractive manufacturing operation to be different from the fluence (namely, the processing condition) used by the second subtractive manufacturing operation. Especially, the processing system SYS may set the fluence of the processing light EL used by the first subtractive manufacturing operation to be higher than the fluence used by the second subtractive manufacturing operation. Therefore, as already described in detail, the processing system SYS can process the workpiece W so as to form the appropriate wall part WP.

### (4) Modified Example

Next, a modified example of the processing system SYS will be described.

### (4-1) First Modified Example

In the above-described description, the processing system SYS divides the target processing part TP into the first part WTP1 and the second part WTP2 under the control of the control unit 4. On the other hand, in a first modified example, the processing system SYS may divide the target processing part TP into the first part WTP1, the second part WTP2, and a third part WTP3 under the control of the control unit 4. Namely, the processing system SYS may set a part of the target processing part TP to the first part WTP1, another part of the target processing part TP to the second part WTP2, and the remaining part of the target processing part TP to the third part WTP3 under the control of the control unit 4.

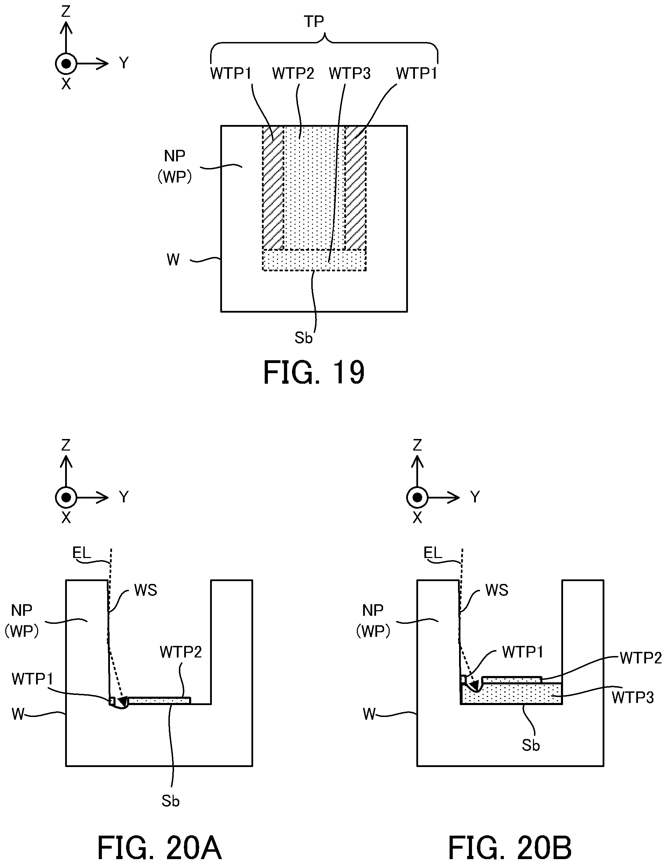

FIG. 19 illustrates examples of the first part WTP1, the second part WTP2, and the third part WTP3 that are set to form the wall part WP illustrated in FIG. 5. FIG. 19 is a cross-sectional view illustrating examples of the first part WTP1, the second part WTP2, and the third part WTP3 of the target processing part TP.

As illustrated in FIG. 19, the third part WTP3 may be adjacent to both the first part WTP1 and the second part WTP2. Specifically, the third part WTP3 may be adjacent to the first part WTP1 and the second part WTP2 along the propagating direction of the processing light EL. Especially, the third part WTP3 may be positioned under the first part WTP1 and the second part WTP2.

The control unit 4 may set the third part WTP3 so that a size (in this case, a height in the Z-axis direction, and a thickness) of the third part WTP3 along the propagating direction of the processing light EL is a predetermined size. For example, the control unit 4 may set the third part WTP3 having the predetermined size so that the target processing part TP having the predetermined size remains after the removal of the first part WTP1 and the second part WTP2 is completed.

The control unit 4 may set the predetermined size based on a size of the target processing part TP. The size of the target processing part TP may include the distance (in other words, the length or the depth) Dis1 (see FIG. 8A) in a direction along the wall part WP of the target processing part TP. For example, the control unit 4 may set the predetermined size so that a predetermined percentage of the size of the target processing part TP is the predetermined size. For example, the control unit 4 may set the predetermined size so that a size equivalent to 20% of the size of the target processing part TP or a size equivalent to 20% or more of the size of the target processing part TP is the predetermined size. In this case, the processing system SYS may process the workpiece W so that the target processing part TP having a size equivalent to 20% or more of the original size remains after the removal of the first part WTP1 and the second part WTP2 is completed. For example, the control unit 4 may set the predetermined size so that a size equivalent to 10% of the size of the target processing part TP or a size equivalent to 10% or more of the size of the target processing part TP is the predetermined size. In this case, the processing system SYS may process the workpiece W so that the target processing part TP having a size equivalent to 10% or more of the original size remains after the removal of the first part WTP1 and the second part WTP2 is completed. For example, the control unit 4 may set the predetermined size so that a size equivalent to 5% of the size of the target processing part TP or a size equivalent to 10% or more of the size of the target processing part TP is the predetermined size. In this case, the processing system SYS may process the workpiece W so that the target processing part TP having a size equivalent to 5% or more of the original size remains after the removal of the first part WTP1 and the second part WTP2 is completed.

Then, the processing system SYS may remove the first part WTP1 and the second part WTP2 of the target processing part TP by performing the first subtractive manufacturing operation for irradiating at least a part of the first part WTP1 with the processing light EL to remove at least a part of the first part WTP1 and the second subtractive manufacturing operation for irradiating at least a part of the second part WTP2 with the processing light EL to remove at least a part of the second part WTP2, under the control of the control unit 4. Especially, the processing system SYS may remove the first part WTP1 and the second part WTP2 of the target processing part TP by alternately repeating the first subtractive manufacturing operation and the second subtractive manufacturing operation. Then, after the removal of the first part WTP1 and the second part WTP2 is completed, the processing system SYS may remove the third part WTP3 of the target processing part TP by performing a third subtractive manufacturing operation for irradiating at least a part of the third part WTP3 with the processing light EL to remove at least a part of the third part WTP3. Especially, the processing system SYS may remove the third part WTP3 of the target processing part TP by repeating the third subtractive manufacturing operation. In this manner, in the first modified example, the processing system SYS may remove the target processing part TP by removing the first part WTP1 and the second part WTP2 and then removing the third part WTP3.

In a case where the third part WTP3 is removed after the first part WTP1 and the second part WTP2 are removed in this manner, there is a lower possibility that the non-target processing part NP is unintentionally processed, compared to a case where the first part WTP1 and the second part WTP2 are removed without setting the third part WTP3. Next, with reference to FIG. 20A and FIG. 20B, a reason will be described.

FIG. 20A is a cross-sectional view illustrating the workpiece W from which the first part WTP1 and the second part WTP2 are removed without setting the third part WTP3. When the wall part WP is formed, there is a possibility that at least one of the first part WTP1 and the second part WTP2 is unintentionally processed at a timing that is different from a timing at which at least one of the first part WTP1 and the second part WTP2 should be processed. As one example, as illustrated in FIG. 20A, when the processing light that is irradiated onto the first part WTP1, which is adjacent to the wall part WP, is reflected by the exposed wall surface WS, there is a possibility that the processing light EL, which should be irradiated onto a part of the first part WTP1, is irradiated onto the second part WTP2 (alternatively, onto another part of the first part WTP1, the same applies in the first modified example in the below-described description). As a result, there is a possibility that the second part WTP2 is processed at a timing that is different from a timing at which the second part WTP2 should be processed. In this case, the second part WTP2 is further processed at the timing at which the second part WTP2 should be processed, and therefore, there is a possibility that the processed amount of the second part WTP2 is larger than the processed amount that is originally expected. As a result, a technical problem occurs that the non-target processing part NP, which is positioned under the second part WTP2, is unintentionally processed.

Especially, there is a higher possibility that the non-target processing part NP is unintentionally processed as the thickness of the remaining first part WTP1 and second part WTP2 is thinner. Namely, there is a possibility that the non-target processing part NP is unintentionally processed in a case where the thickness of the remaining first part WTP1 and second part WTP2 is thinner than a certain size. Conversely, in a case where the thickness of the remaining first part WTP1 and second part WTP2 exceeds the certain size, there is a low possibility that the non-target processing part NP, which is positioned under the first part WTP1 or the second part WTP2, is unintentionally processed even when the first part WTP1 or the second part WTP2 is processed at the timing that is different from the timing at which the first part WTP1 or the second part WTP2 should be processed.

In the first modified example, not only the first part WTP1 and the second part WTP2 but also the third part WTP3 are set in consideration of this technical problem. Therefore, as illustrated in FIG. 20B that is a cross-sectional view illustrating the workpiece W in which the first part WTP1, the second part WTP2, and the third part WTP3 are set, there is a low possibility that the non-target processing part NP is unintentionally processed even when the first part WTP1 or the second part WTP2 is processed at the timing that is different from the timing at which the first part WTP1 or the second part WTP2 should be processed. This is because, the third part WTP3, which is a part of the target processing part TP, further exists under the first part WTP1 or the second part WTP2, as illustrated in FIG. 20B. Considering this technical effects, the control unit 4 may set the size (in this case, the length in the Z-axis direction, and the thickness) of the third part WTP3 along the propagating direction of the processing light EL so that the third part WTP3 has a size that realizes a situation where the non-target processing part NP is not processed even when the first part WTP1 or the second part WTP2 is processed at the timing that is different the timing at which the first part WTP1 or the second part WTP2 should be processed.

The processing condition for removing the third part WTP3 may be the same as the above-described processing condition for removing the second part WTP2. For example, the light condition of the processing light EL that is irradiated onto the third part WTP3 for removing the third part WTP3 may be the same as the light condition of the processing light EL that is irradiated onto the second part WTP2 for removing the second part WTP2. For example, the fluence of the processing light EL that is irradiated onto the third part WTP3 for removing the third part WTP3 may be the same as the fluence of the processing light EL that is irradiated onto the second part WTP2 for removing the second part WTP2. For example, the fluence of the processing light EL that is irradiated onto the third part WTP3 for removing the third part WTP3 may be lower than the fluence of the processing light EL that is irradiated onto the first part WTP1 for removing the first part WTP1. In this case, there is a lower possibility that the non-target processing part NP is unintentionally processed by the processing light EL reflected by the wall surface WS of the wall part WP, compared to a case where the fluence of the processing light EL that is irradiated onto the third part WTP3 for removing the third part WTP3 is higher than the fluence of the processing light EL that is irradiated onto the second part WTP2 for removing the second part WTP2.

The processing condition for removing a part of the third part WTP may be different from the processing condition for removing another part of the third part WTP. For example, the processing condition for processing a part of the third part WTP that is adjacent to the non-target processing part NP may be different from the processing condition for processing the remaining part of the third part WTP. As one example, the processing condition for processing a part of the third part WTP3 that is adjacent to the non-target processing part NP may be the same as the processing condition for removing the first part WTP1 described above. The processing condition for processing the remaining part of the third part WTP may be the same as the processing condition for removing the second part WTP2 described above. In this case, the processing system SYS can form the wall part WP that extends in the Z-axis direction (namely, rises vertically) more appropriately, compared to a case where the processing condition for processing a part of the third part WTP that is adjacent to the non-target processing part NP is the same as the processing condition for processing the remaining part of the third part WTP. However, the processing condition for processing a part of the third part WTP that is adjacent to the non-target processing part NP may be the same as the processing condition for processing the remaining part of the third part WTP. In this case, the processing system SYS can form the bottom surface Sb having a desired flatness more appropriately, compared to a case where the processing condition for processing a part of the third part WTP that is adjacent to the non-target processing part NP is different from the processing condition for processing the remaining part of the third part WTP. Therefore, the processing condition for processing a part of the third part WTP that is adjacent to the non-target processing part NP may be the same as the processing condition for processing the remaining part of the third part WTP in a case where forming the bottom surface Sb having the desired flatness is prioritized over forming the wall part WP extending in the Z-axis direction (namely, rising vertically). On the other hand, the processing condition for processing a part of the third part WTP that is adjacent to the non-target processing part NP may be different from the processing condition for processing the remaining part of the third part WTP in a case where forming the wall part WP extending in the Z-axis direction (namely, rising vertically) is prioritized over forming the bottom surface Sb having the desired flatness.

The processing system SYS may measure the third part WTP3 (namely, a part of the remaining target processing part TP) by using the measurement unit 2 after the removal of the first part WTP1 and the second part WTP2 is completed. For example, the processing system SYS may measure a shape of the third part WTP3 (namely, a remaining part of the target processing part TP). Then, the processing system SYS may perform the third subtractive manufacturing operation for removing at least a part of the third part WTP3 (namely, the remaining target processing part TP) based on a measured result of the third part WTP3. As a result, the processing system SYS can perform the third subtractive manufacturing operation with high accuracy.

For example, the processing system SYS may measure the shape of the third part WTP3 (namely, the remaining part of the target processing part TP) even after starting the third subtractive manufacturing operation for removing at least a part of the third part WTP3. Then, the processing system SYS may continue the third subtractive manufacturing operation based on the measured result of the third part WTP3 (namely, the remaining target processing part TP). As a result, the processing system SYS can perform the third subtractive manufacturing operation with high accuracy.

Incidentally, the size of the third part WTP3 that should be removed by the third subtractive manufacturing operation is smaller as a ratio of the size of the third part WTP3 to the target processing part TP before the removal (for example, the ratio whose example is 20%, 10% or 5% described above) is smaller. Therefore, the shape of the third part WTP3 may be measured at a lower frequency after the third subtractive manufacturing operation is started as the size of the third part WTP3 that should be removed by the third subtractive manufacturing operation is smaller. Therefore, the throughput of the processing system SYS is improved.

Conversely, there is a possibility that the throughput of the processing system SYS deteriorates as the ratio of the size of the third part WTP3 to the target processing part TP before the removal (for example, the ratio whose example is 20%, 10% or 5% described above) is larger. However, there is a lower possibility that the non-target processing part NP is be unintentionally processed by the processing light EL reflected on the wall surface WS of the wall part WP as the ratio of the size of the third part WTP3 to the target processing part TP before the removal (for example, the ratio whose example is 20%, 10% or 5% described above) is larger.

Therefore, the control unit 4 may automatically set the size of the third part WTP3 (for example, the ratio of the size of the third part WTP3 to the target processing part TP before the removal) by considering a trade-off between an effect of improving the throughput of the processing system SYS and an effect of reducing the possibility of unintentional processing of the non-target processing part NP. Alternatively, an operator of the processing system SYS may manually set the size of the third part WTP3 (for example, the ratio of the size of the third part WTP3 to the target processing part TP before the removal).

On the other hand, the processing system SYS may not measure the remaining target processing part TP (for example, at least a part of the first part WTP1 and the second part WTP2) by using the measurement unit 2 in a period during which the first and second subtractive manufacturing operations are performed to remove the first part WTP1 and the second part WTP2. Therefore, the throughput for the processing of the workpiece W is improved.

However, the processing system SYS may measure the remaining target processing part TP (for example, at least a part of the first part WTP1 and the second part WTP2) by using the measurement unit 2 in at least a part of the period during which the first and second subtractive manufacturing operations are performed to remove the first part WTP1 and the second part WTP2. In this case, the processing system SYS may remove at least a part of the first part WTP1 and the second part WTP2 based on a measured result of at least a part of the first part WTP1 and the second part WTP2 (namely, the remaining target processed part TP).

Incidentally, the processing system SYS may perform the operation described in the first modified example for a purpose that is different form a purpose of preventing the unintentional processing of the non-target processing part NP due to the processing of the first part WTP1. For example, the processing system SYS may perform the operation described in the first modified example for a purpose of improving a beauty of the bottom surface Sb of the non-target processing part NP. As one example, the processing system SYS may perform the operation described in the first modified example for a purpose of reducing color irregularity of the bottom surface Sb. As another example, the processing system SYS may perform the operation described in the first modified example for a purpose of reducing surface roughness of the bottom surface Sb.

### (4-2) Second Modified Example

There is a possibility that unnecessary substance, which is generated from the workpiece W (especially, the target processing part TP) due to the first and second removal operations, is adhered to the exposed surface Se, which is exposed by removing a part of the target processing part TP, in the period during which the first and second removal operations are performed to form the wall part WP. The unnecessary substance may include a substance (so-called debris) that is generated from a part of the workpiece W (especially, the target processing part TP) being molten, evaporated, or sublimated.

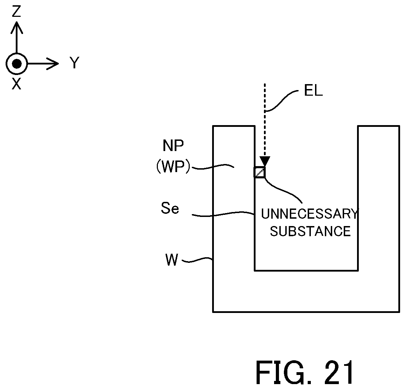

In this case, the processing system SYS may irradiate the exposed surface Se with the processing light EL in order to remove the unnecessary substance adhered to the exposed surface Se, as illustrated in FIG. 21. For example, the processing system SYS may irradiate the exposed surface Se with the processing light EL so that the unnecessary substance adhered to the exposed surface Se is irradiated with the processing light EL. As a result, the unnecessary substance adhered to the exposed surface Se is molten, evaporated, or sublimated by the processing light EL, and therefore, the unnecessary substance is removed from the exposed surface Se.

The processing system SYS may irradiate the exposed surface Se with the processing light EL after completing the removal of the target processing part TP. Alternatively, the processing system SYS may irradiate the exposed surface Se with the processing light EL before completing the removal of the target processing part TP. In this case, the processing system SYS may irradiate the exposed surface Se with the processing light EL after removing a predetermined amount of the target processing part TP.

The processing condition for removing the unnecessary substance from the exposed surface Se may be the same as the processing condition for removing the second part WTP2 described above. For example, the light condition of the processing light EL irradiated onto the exposed surface Se to remove the unnecessary substance may be the same as the light condition of the processing light EL irradiated onto the second part WTP2 to remove the second part WTP2. For example, the fluence of the processing light EL irradiated onto the exposed surface Se to remove the unnecessary substance may be the same as the fluence of the processing light EL irradiated onto the second part WTP2 to remove the second part WTP2. For example, the fluence of the processing light EL irradiated onto the exposed surface Se to remove the unnecessary substance may be lower than the fluence of the processing light EL irradiated onto the first part WTP1 to remove the first part WTP1. In this case, there is a lower possibility that the exposed surface Se is unintentionally processed by the processing light EL for removing the unnecessary substance, compared to a case where the fluence of the processing light EL irradiated onto the exposed surface Se is higher than the fluence of the processing light EL irradiated onto the second part WTP2.

Alternatively, the processing condition for removing the unnecessary substance from the exposed surface Se may be different from the processing condition for removing the second part WTP2 described above. For example, the fluence of the processing light EL irradiated onto the exposed surface Se for removing the unnecessary substance may be lower than the fluence of the processing light EL irradiated onto the second part WTP2 for removing the second part WTP2. For example, the intensity of the processing light EL irradiated onto the exposed surface Se may be lower than the intensity of the processing light EL irradiated onto the second part WTP2. In this case, there is also a lower possibility that the exposed surface Se is unintentionally processed by the processing light EL for removing the unnecessary substance, compared to a case where the fluence of the processing light EL irradiated onto the exposed surface Se is higher than the fluence of the processing light EL irradiated onto the second part WTP2.

The processing system SYS may remove the unnecessary substance from the exposed surface Se by using the principle of non-thermal processing. For example, the processing system SYS may remove the unnecessary substance from the exposed surface Se by irradiating the exposed surface Se with the processing light EL that includes the pulsed light the ON time of which is equal to or shorter than pico-seconds or femto-seconds. In this case, an influence on the exposed surface Se due to the heat caused by the energy of the processing light EL is reduced, compared to a case where the unnecessary substance is removed from the exposed surface Se by using the principle of thermal processing. Therefore, the processing system SYS can remove the unnecessary substance from the exposed surface Se while reducing the influence on the exposed surface Se due to the heat caused by the energy of the processing light EL.

The processing system SYS may measure the exposed surface Se by using the measurement unit 2 before irradiating the exposed surface Se with the processing light EL. Then, the control unit 4 may calculate a position to which the unnecessary substance is adhered on the exposed surface Se based on a measured result of the exposed surface Se. As one example, the control unit 4 may calculate the position to which the unnecessary substance is adhered on the exposed surface Se by calculating a difference between an actual shape of the exposed surface Se indicated by the measured result by the measurement unit 2 and a designed shape of the exposed surface Se. Alternatively, a user of the processing system SYS may input, into the processing system SYS, information related to the position to which the unnecessary substance is adhered on the exposed surface Se. Then, the control unit 4 may control the processing unit 1 and the stage unit 3 so as to irradiate the position to which the unnecessary substance is adhered on the exposed surface Se with the processing light EL. Namely, the control unit 4 may control the processing unit 1 and the stage unit 3 so as to irradiate a position, which is calculated as the position to which the unnecessary substance is adhered on the exposed surface Se with the processing light EL. As a result, the processing system SYS can appropriately remove the unnecessary substances adhered to the exposed surface Se.

The processing system SYS may rotate the stage 32 around a rotational axis that extends in a direction intersecting the propagating direction of the processing light EL by using the stage driving system 33 before irradiating the exposed surface Se with the processing light EL or after starting to irradiate the exposed surface Se with the processing light EL. For example, in the example illustrated in FIG. 21, since the propagating direction of the processing light EL is the Z-axis direction, the processing system SYS may rotate the stage 32 around at least one rotational axis of a rotational axis along the X-axis and a rotational axis along the Y-axis by using the stage driving system 33. Especially, the processing system SYS may rotate the stage 33 so that the exposed surface Se is a surface intersecting the propagating direction of the processing light EL. Then, the processing system SYS may irradiate the exposed surface Se with the processing light EL. As a result, the processing system SYS can easily irradiate the exposed surface Se with the processing light EL, compared to a case where the exposed surface Se is a surface along the propagating direction of the processing light EL. Therefore, the processing system SYS can appropriately remove the unnecessary substance from the exposed surface Se.

The processing system SYS may rotate the processing head 12 around a rotational axis that extends in a direction intersecting the propagating direction of the processing light EL by using the head driving system 13 before irradiating the exposed surface Se with the processing light EL or after starting to irradiate the exposed surface Se with the processing light EL. For example, in the example illustrated in FIG. 21, since the propagating direction of the processing light EL is the Z-axis direction, the processing system SYS may rotate the processing head 12 around at least one rotational axis of a rotational axis along the X-axis and a rotational axis along the Y-axis by using the head driving system 13. Especially, the processing system SYS may rotate the processing head 12 so that the exposed surface Se is a surface intersecting the propagating direction of the processing light EL. Then, the processing system SYS may irradiate the exposed surface Se with the processing light EL. As a result, the processing system SYS can easily irradiate the exposed surface Se with the processing light EL, compared to a case where the exposed surface Se is a surface along the propagating direction of the processing light EL. Therefore, the processing system SYS can appropriately remove the unnecessary substance from the exposed surface Se.

The processing system SYS may irradiate the exposed surface Se with the processing light EL while supplying gas to the exposed surface Se by using a non-illustrated gas supply apparatus. In this case, the unnecessary substance that has been removed from the exposed surface Se by the processing light EL is blown off from the exposed surface Se by the gas. As a result, there is a lower possibility that the unnecessary substance that has been removed from the exposed surface Se by the processing light EL is adhered to the exposed surface Se again. As a result, the processing system SYS can appropriately remove the unnecessary substance adhered to the exposed surface Se.

### (4-3) Third Modified Example

In a third modified example, the processing system SYS may set an operation mode of the processing system SYS to a desired mode under the control of the control unit 4 in a case where an adjacent part AP, which is adjacent to the non-target processing part NP, of the target processing part TP is removed. Incidentally, the above-described first part WTP1 of the target processing part TP is adjacent to the non-target processing part NP. Therefore, the first part WTP1 of the target processing part TP is one example of the adjacent part AP.

Specifically, the processing system SYS may set the operation mode of the processing system SYS to a first mode. Alternatively, the processing system SYS may set the operation mode of the processing system SYS to a second mode that is different from the first mode. The processing system SYS may switch the operation mode of the processing system SYS between the first mode and the second mode.

The first mode and the second mode may be distinguished based on a position of the beam spot BS, which is formed by the processing light EL on the surface of the workpiece W, relative to the boundary BD between the target processing part TP and the non-target processing part NP. Namely, the first mode and the second mode may be distinguished based on a positional relationship between the boundary BD and the beam spot BS. The first mode and the second mode may be different in that the positional relationship between the boundary BD and the beam spot BS in the first mode is different from the positional relationship between the boundary BD and the beam spot BS in the second mode.

Incidentally, the beam spot BS formed by the processing light EL on the surface of the workpiece W may mean an area determined based on an intensity distribution of the processing light EL on the surface of the workpiece W. For example, the beam spot BS may mean an area that is irradiated with light component, whose intensity is equal to or higher than a predetermined intensity, of the processing light EL. Namely, the beam spot BS may mean an area that is at least a part of the area irradiated with the processing light EL and that is irradiated with light component, whose intensity is equal to or higher than the predetermined intensity, of the processing light EL. In other words, the beam spot BS may mean an area that satisfies a condition that the intensity of the light component of the processing light EL within the beam spot BS is equal to or higher than the predetermined intensity.

The predetermined intensity may be set based on the intensity of the processing light EL by which the subtractive manufacturing of the workpiece W can be performed. For example, the control unit 4 may set the predetermined intensity based on the intensity of the processing light EL by which the subtractive manufacturing of the workpiece W can be performed. Alternatively, the user of the processing system SYS may set the predetermined intensity based on the intensity of the processing light EL by which the subtractive manufacturing of the workpiece W can be performed. Alternatively, the predetermined intensity that is a fixed value may be set in advance based on the intensity of the processing light EL by which the subtractive manufacturing of the workpiece W can be performed.

The predetermined intensity may be set to the intensity of the processing light EL by which the subtractive manufacturing of the workpiece W can be performed. For example, the predetermined intensity may be set to a threshold value that allows the intensity of the processing light EL that is high enough to perform the subtractive manufacturing of the workpiece W to be distinguished from the intensity of the processing light EL that is not high enough to perform the subtractive manufacturing of the workpiece W based on the intensity of the processing light EL. In other words, the predetermined intensity may be set to a threshold value that allows the intensity of the processing light EL that is high enough to perform the subtractive manufacturing of the workpiece W to be distinguished from the intensity of the processing light EL that is too low to perform the subtractive manufacturing of the workpiece W based on the intensity of the processing light EL. Alternatively, the predetermined intensity may be set based on a peak intensity in the intensity distribution of the processing light EL. For example, the predetermined intensity may be set to an intensity that is obtained by multiplying the peak intensity by K (wherein, K is a variable number representing a real number that is larger than 0 and smaller than 1). 1/e² (wherein, e means Napier's constant) or 0.135 is one example of the variable K, in a case where the processing EL is a Gaussian beam. 0.135 is another example of the variable K, in a case where the processing EL is the Gaussian beam.

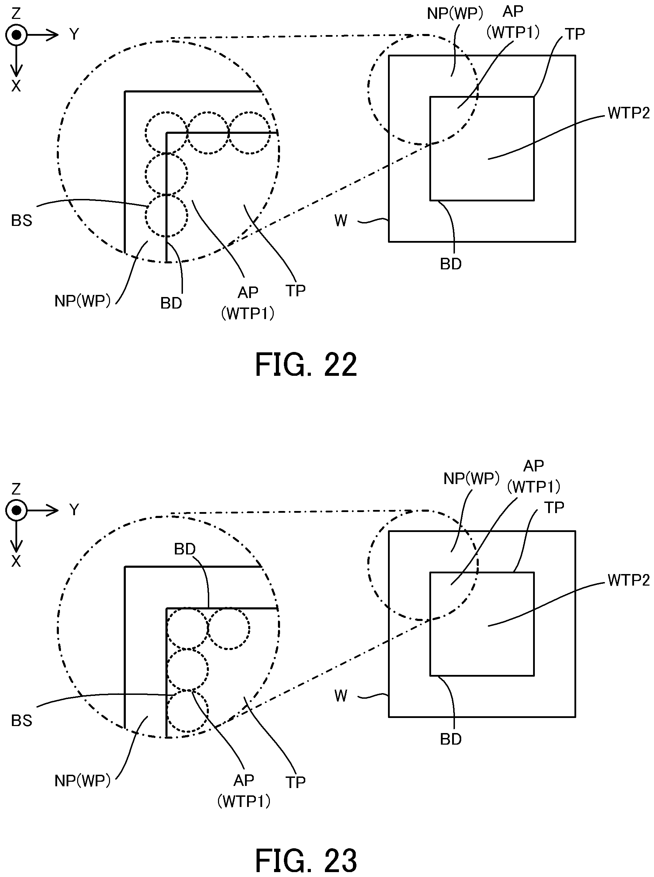

FIG. 22 illustrates one example of the positional relationship between the boundary BD and the beam spot BS in the first mode. As illustrated in FIG. 22, the first mode may be an operation mode in which the workpiece W is processed in a state where a center of the beam spot BS is positioned on the boundary BD on the surface of the workpiece W.

In order to set the operation mode of the processing system SYS to the first mode, the control unit 4 may generate first processing control data for processing the workpiece W in the state where the center of the beam spot BS is positioned on the boundary BD. For example, the control unit 4 may generate the first processing control data for controlling a center position of the beam spot BS so that the center of the beam spot BS moves along the boundary BD on the surface of the workpiece W. Specifically, the control unit 4 may generate the first processing control data including first processing path data for controlling the center position of the beam spot BS so that the center of the beam spot BS moves along a first processing path on the boundary BD on the surface of the workpiece W. As a result, the processing system SYS can process the workpiece W in the first mode based on the first processing control data generated by the control unit 4.

On the other hand, FIG. 23 illustrates an example of the positional relationship between the boundary BD and the beam spot BS in the second mode. As illustrated in FIG. 23, the second mode may be an operation mode in which the workpiece W is processed in a state where the center of the beam spot BS is away from the boundary BD on the surface of the workpiece W. Specifically, the second mode may be an operation mode in which the workpiece W is processed in a state where the center of the beam spot BS is away from the boundary BD by a predetermined distance on the surface of the workpiece W.

Especially, the second mode may be an operation mode in which the workpiece W is processed in a state where the center of the beam spot BS is away from the boundary BD toward an inside of the target processing part TP on the surface of the workpiece W. In this case, as illustrated in FIG. 23, the second mode may be an operation mode in which the workpiece W is processed in a state where the center of the beam spot BS is positioned only in the inside of the target processing part TP that is away from the boundary BD. The second mode may be an operation mode in which the workpiece W is processed in a state where the center of the beam spot BS is positioned only inside the boundary BD. Namely, the second mode may be an operation mode in which the workpiece W is processed in a state where the center of the beam spot BS is not positioned on the boundary BD. The second mode may be an operation mode in which the workpiece W is processed in a state where the center of the beam spot BS is not positioned on the non-target processing part NP that is outside the boundary BD.

The predetermined distance may be set based on the size of the beam spot BS. For example, the control unit 4 may set the predetermined distance based on the size of the beam spot BS. Alternatively, the user of the processing system SYS may set the predetermined distance based on the size of the beam spot BS. Alternatively, the predetermined distance that is a fixed value may be set in advance based on the size of the beam spot BS.

The "size of the beam spot BS" may mean the size of the beam spot BS in a plane intersecting the propagating direction of the processing light EL. The "size of the beam spot BS" may mean the size of the beam spot BS on the surface of the workpiece W intersecting the propagating direction of the processing light EL. In a case where the beam spot BS is circular, the size of the beam spot BS may be typically a diameter or a radius of the beam spot BS. In a case where the beam spot BS is elliptical, the size of the beam spot BS may be typically a length of a long axis or a short axis of the beam spot BS.

Incidentally, the "size of the beam spot BS" may mean a distance between two points at which the intensity of the processing light EL is the above-described predetermined intensity. The "size of the beam spot BS" may mean a distance between two points at which the intensity of the processing light EL is half the peak intensity. The "size of the beam spot BS" may mean a diameter of a circle whose center is a center of mass of the intensity distribution of the processing light EL and which includes a predetermined percentage of the beam energy.

As one example, as illustrated in FIG. 23, the predetermined distance may be a distance corresponding to the radius of the beam spot BS. Namely, the predetermined distance may be a distance corresponding to half the diameter of the beam spot BS. In this case, as illustrated in FIG. 23, the second mode may be an operation mode in which the workpiece W is processed in a state where the beam spot BS itself is positioned only in the inside of the target processing part TP that is away from the boundary BD. The second mode may be an operation mode in which the workpiece W is processed in a state where the beam spot BS itself is positioned only inside the boundary BD. Namely, the second mode may be an operation mode in which the workpiece W is processed in a state where the beam spot BS itself is not positioned on the boundary BD. The second mode may be an operation mode in which the workpiece W is processed in a state where the beam spot BS itself is not positioned on the non-target processing part NP that is outside the boundary BD.

Incidentally, as described above, the beam spot BS may mean the area that is irradiated with the light component, whose intensity is equal to or higher than the predetermined intensity, of the processing light EL. Therefore, the state "where the beam spot BS is positioned only in the inside of the target processing part TP that is away from the boundary BD" may mean a state where the area that is irradiated with the light component, whose intensity is equal to or higher than the predetermined intensity, of the processing light EL is positioned only in the inside of the target processing part TP that is away from the boundary BD. In this case, the boundary BD may be irradiated with light component, whose intensity is lower than the predetermined intensity, of the processing light EL. The non-target processing part NP that is outside the boundary BD may be irradiated with the light component, whose intensity is lower than the predetermined intensity, of the processing light EL. In any case, the fact remains that the inside of the target processing part TP that is away from the boundary BD is irradiated with the light component, whose intensity is equal to or higher than the predetermined intensity, of the processing light EL, and therefore, it can be said that the beam spot BS is positioned only in the inside of the target processing part TP that is away from the boundary BD.

In order to set the operation mode of the processing system SYS to the second mode, the control unit 4 may generate second processing control data for processing the workpiece W in the state where the center of the beam spot BS is away from the boundary BD. For example, the control unit 4 may generate the second processing control data for controlling the center position of the beam spot BS so that the center of the beam spot BS moves at a position on the surface of the workpiece W that is away from the boundary BD. Specifically, the control unit 4 may generate the second processing control data that includes second processing path data for controlling the center position of the beam spot BS so that the center of the beam spot BS moves along a second processing path that is away from the boundary BD on the surface of the workpiece W. For example, the control unit 4 may generate the second processing control data that includes the second processing path data for controlling the center position of the beam spot BS so that the center of the beam spot BS is positioned only in the inside of the target processing part TP that is away from the boundary BD. For example, the control unit 4 may generate the second processing control data that includes the second processing path data for controlling the center position of the beam spot BS so that the beam spot BS is positioned only in the inside of the target processing part TP that is away from the boundary BD. In other words, the control unit 4 may generate the second processing control data that includes the second processing path data for controlling the center position of the beam spot BS so that the center of the beam spot BS is positioned on an outside of the boundary BD (namely, on the non-target processing part NP). As a result, the processing system SYS can process the workpiece W in the second mode based on the second processing control data generated by the control unit 4.

In this case, a size of a part removed from the workpiece W based on the second processing control data may be typically smaller than a size of a part removed from the workpiece W based on the first processing control data. Namely, the size of the part removed from the workpiece W indicated by the second processing control data may be smaller than the size of the part removed from the workpiece W indicated by the first processing control data.

Alternatively, the processing system SYS may process the workpiece W in the second mode based on the first processing control data that is for setting the operation mode of the processing system SYS to the first mode. Specifically, the first processing control data is the processing control data for moving the center of the beam spot BS along the first processing path on the boundary BD, as described above. In this case, the control unit 4 may change (in other words, modify) the first processing path so that the first processing path is away from the boundary BD toward the inside of the target processing part TP to thereby generate the changed first processing path as the second processing path. The control unit 4 may change the first processing control data so that the first processing path is away from the boundary BD toward the inside of the target processing part TP to thereby generate the changed first processing control data as the second processing control data. As a result, the processing system SYS can process the workpiece W in the second mode based on the first processing path that has been changed by the control unit 4 (namely, the second processing path that has been generated from the first processing path by the control unit 4). Namely, the processing system SYS can process the workpiece W in the second mode based on the first processing control data that has been changed by the control unit 4 (namely, the second processing control data that has been generated from the first processing control data by the control unit 4).

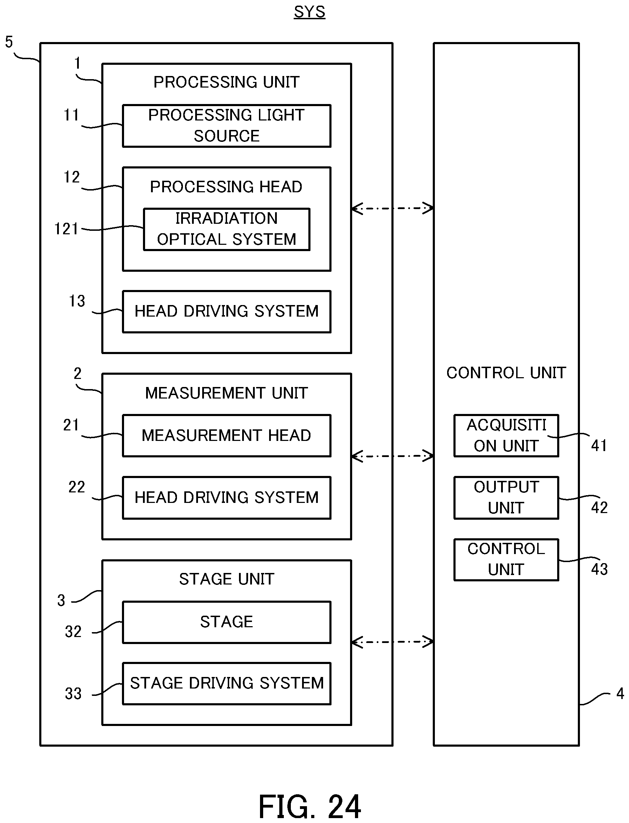

In a case where the processing system SYS processes the workpiece W in the second mode based on the first processing control data, the processing system SYS may include an acquisition unit 41, an output unit 42, and a control unit 43 as a part of the control unit 4, as illustrated in FIG. 24 that illustrates one example of the configuration of the processing system SYS in the third modified example. In addition, the processing system SYS may include at least one of the acquisition unit 41, the output unit 42, and the control unit 43 as an apparatus that is different from the control unit 4.

The acquisition unit 41 may acquire the first processing control data. For example, the acquisition unit 41 may acquire the first processing control data by newly generating the first processing control data. For example, the acquisition unit 41 may acquire the first processing control data by reading the first processing control data stored in the storage apparatus of the control unit 4. For example, the acquisition unit 41 may acquire the first processing control data from an external apparatus that generates the first processing control data.

The acquisition unit 41 may further acquire information related to the processing light EL. For example, the acquisition unit 41 may acquire information related to the size of the beam spot BS as at least a part of the information related to the processing light EL.

The output unit 42 may change the first processing control data acquired by the acquisition unit 41 to thereby generate the second processing control data. In this case, the output unit 42 may change the first processing control data based on the information related to the processing light EL acquired by the acquisition unit 41. For example, in a case where information related to the size of the beam spot BS is acquired by the acquisition unit 41 as at least a part of the information related to the processing light EL, the output unit 42 may change the first processing control data so that the first processing path indicated by the first processing control data is away from the boundary BD by the predetermined distance based on the size of the beam spot BS. Then, the output unit 42 may output the changed first processing control data to the control unit 43 as the second processing control data.

The control unit 43 may control at least one of the processing unit 1 and the stage unit 3 to process the workpiece W based on the second processing control data (namely, the changed first processing control data) output from the output unit 42.

The operation mode of the processing system SYS may be automatically selected (in other words, determined or set) by the control unit 4. For example, the control unit 4 may select either one of the first and second modes as the operation mode of the processing system SYS based on a characteristic (for example, a type) of the workpiece W that should be processed by the processing system SYS. In this case, the control unit 4 may select either one of the first and second modes as the operation mode of the processing system SYS based on the characteristic (for example, the type) of the workpiece W by using information that defines a relationship between the characteristic of the workpiece W and the operation mode.

The operation mode of the processing system SYS may be manually selected (in other words, determined or set) by the user of the processing system SYS. For example, the user may select either one of the first and second modes as the operation mode of the processing system SYS based on the characteristic (for example, the type) of the workpiece W that should be processed by the processing system SYS.

As described above, in the third modified example, the processing system SYS can remove the adjacent part AP (for example, the first part WTP1) of the target processing part TP that is adjacent to the non-target processing part NP, after setting the operation mode of the processing system SYS to the first mode or the second mode.

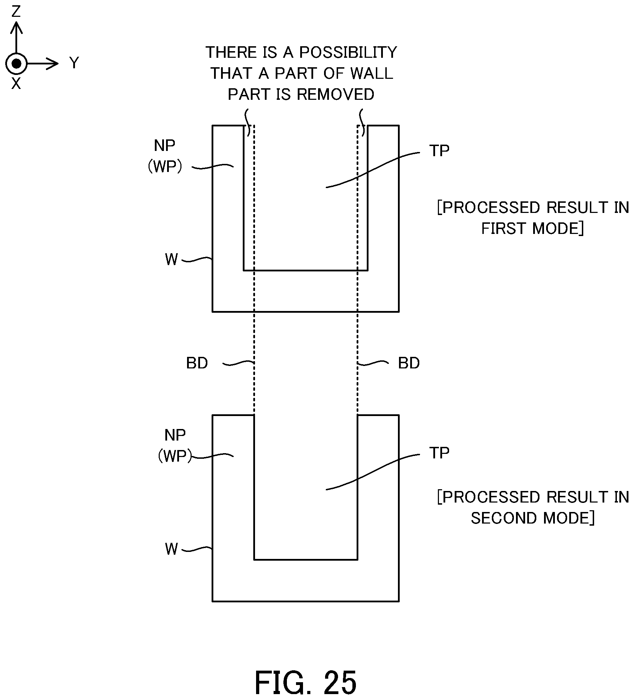

Here, the first mode is the operation mode in which the center of the beam spot BS is positioned on the boundary BD, as illustrated in FIG. 22. Therefore, there is a possibility that the beam spot BS is formed on the non-target processing part NP that is outside the boundary BD. As a result, there is a possibility that the non-target processing part NP, which should not be processed, is unintentionally processed. Specifically, as illustrated in FIG. 25A that illustrates the workpiece W processed by the processing system SYS in the first mode, there is a possibility that a part of the non-target processing part NP, which remains as the wall part WP and which should not be processed, is unintentionally removed. As a result, there is a possibility that the size of the remaining wall part WP is different from the designed size.

On the other hand, the second mode is the operation mode in which the center of the beam spot BS is away from the boundary BD toward the inside of the target processing part TP, as illustrated in FIG. 23. Therefore, in a case where the processing system SYS processes the workpiece W in the second mode, a size of a spot part, which is formed on the non-target processing part NP that is outside the boundary BD, of the beam spot BS is smaller, compared to a case where the processing system SYS processes the workpiece W in the first mode. In some cases, the beam spot BS is not be formed on the non-target processing part NP that is outside the boundary BD. As a result, as illustrated in FIG. 25B that illustrates the workpiece W processed by the processing system SYS in the second mode, in a case where the processing system SYS processes the workpiece W in the second mode, the size of the part of the workpiece W that is removed by the subtractive manufacturing is smaller, compared to the case where the processing system SYS processes the workpiece W in the first mode. Therefore, the size of the unintentionally removed part of the non-target processing part NP, which should not be processed, is reduced. In some cases, the non-target processing part NP that should not be processed is not removed. Therefore, in a case where the processing system SYS processes the workpiece W in the second mode, a difference between the size of the remaining wall part WP and the designed size is smaller, compared to the case where the processing system SYS processes the workpiece W in the first mode. In some cases, the size of the remaining wall part WP is the same as the designed size. Therefore, the processing system SYS can appropriately remove the target processing part TP so that the non-target processing part NP, which should not be processed, remains as the wall part WP.

However, in a case where the processing system SYS processes the workpiece W in the second mode, a degree of an overlap of the beam spot BS changes in the process of scanning the adjacent part AP (especially, a vicinity of the boundary BD) with the processing light EL along the boundary BD, compared to the case where the processing system SYS processes the workpiece W in the first mode. As a result, there is a possibility that the amount of the energy transferred from the processing light EL to the workpiece W is insufficient in the process of scanning the adjacent part AP (especially, a vicinity of the boundary BD) with the processing light EL along the boundary BD. As a result, there is a possibility that the wall part WP is unintentionally formed so that the angle θ3 (see FIG. 7) between the upper surface Su of the non-target processing part NP and the wall part WP is smaller than the desired angle. For example, there is a possibility that the wall part WP that is inclined with respect to the Z-axis direction (namely, that does not rise vertically) is unintentionally formed in a situation where the wall part WP that extends along the Z-axis direction (namely, that rises vertically) should be formed. Even in this case, the processing system can appropriately form the wall part WP so that the angle θ3 (see FIG. 7) between the upper surface Su of the non-target processing part NP and the wall part WP is smaller than the desired angle by diving the target processing part TP into the first part WTP1 and the second part WTP2 as described above, and by alternately repeating the first subtractive manufacturing operation for removing at least a part of the first part WTP1 and the second subtractive manufacturing operation for removing at least a part of the second part WTP2. For example, the processing system SYS can appropriately form the wall part WP that extends in the Z-axis direction (namely, rises vertically) in a situation where the wall part WP that extends in the Z-axis direction (namely, rises vertically) should be formed.

### (4-4) Other Modified Example

The processing system SYS may form the wall part WP by using the head driving system 13 to rotate the processing head 12 around at least one rotational axis of a rotational axis along the X-axis and a rotational axis along the Y-axis. The processing system SYS may form the wall part WP by using the stage driving system 33 to rotate the stage 32 around at least one rotational axis of a rotational axis along the X-axis and a rotational axis along the Y-axis. Namely, the processing system SYS may form the wall part WP by relatively tilting the stage 32 relative to the processing head 12. In this case, the processing system SYS may form the wall part WP without dividing the target processing part TP into the first part WTP1 and the second part WTP2. However, even in a case where the processing system SYS relatively tilts the stage 32 relative to the processing head 12, the processing system SYS may form the wall part WP by dividing the target processing part TP into the first part WTP1 and the second part WTP2.

In the above-described description, the processing system SYS processes the workpiece W by irradiating the workpiece W with the processing light EL. However, the processing system SYS may process the workpiece W by irradiating the workpiece W with any energy beam. In this case, the processing system SYS may include a beam source that is configured to emit any energy beam in addition to or instead of the processing light source 11. At least one of a charged particle beam, an electromagnetic wave and the like is one example of any energy beam. A least one of an electron beam, an ion beam and the like is one example of the charged particle beam.

### (5) Supplementary Note

Regarding the above described example embodiment, below described Supplementary notes are further disclosed.

### [Supplementary Note 1]

A processing system including:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus controls the processing apparatus to perform: a first operation for removing at least a part of a first part by irradiating the first part of the target processing part with the energy beam having a first fluence; and a second operation for removing at least a part of a second part by irradiating the second part of the target processing part with the energy beam having a second fluence that is lower than the first fluence,
the first part is adjacent to the second part along a first direction that intersects a propagating direction of the energy beam.

### [Supplementary Note 2]

The processing system according to the Supplementary Note 1, wherein
the first part is adjacent to a non-target processing part of the object along the first direction, and
the second part is positioned at a position that is adjacent to the first part along the first direction and that is away from the non-target processing part more than the first part is.

### [Supplementary Note 3]

The processing system according to the Supplementary Note 2, wherein
the non-target processing part includes a wall part that extends along the propagating direction.

### [Supplementary Note 4]

The processing system according to the Supplementary Note 2, wherein
the non-target processing part includes at least a surface upper part and a wall part, and
an angle between the surface upper part and the wall part is larger than 82 degrees.

### [Supplementary Note 5]

The processing system according to the Supplementary Note 2, wherein
the non-target processing part includes at least a surface upper part and a wall part, and
an angle between the surface upper part and the wall part is larger than 78 degrees.

### [Supplementary Note 6]

The processing system according to the Supplementary Note 2, wherein
the non-target processing part includes at least a surface upper part and a wall part, and
an angle between the surface upper part and the wall part is approximately 90 degrees.

### [Supplementary Note 7]

The processing system according to the Supplementary Note 2, wherein
the non-target processing part includes at least a wall part, and
an angle between the wall part and an axis long a propagating direction of the processing light is equal to or smaller than 8 degrees.

### [Supplementary Note 8]

The processing system according to the Supplementary Note 2, wherein
the non-target processing part includes at least a wall part, and
an angle between the wall part and an axis long a propagating direction of the processing light is equal to or smaller than 12 degrees.

### [Supplementary Note 9]

The processing system according to the Supplementary Note 2, wherein
the non-target processing part includes at least a wall part, and
an angle between surface upper part and the wall part is approximately 0 degree.

### [Supplementary Note 10]

The processing system according to any one of the Supplementary Notes 3 to 9, wherein
the wall part is approximately parallel to the propagating direction.

### [Supplementary Note 11]

The processing system according to any one of the Supplementary Notes 1 to 3 and 10, wherein
the control apparatus determines the first part based on a shape of the target processing part.

### [Supplementary Note 12]

The processing system according to any one of the Supplementary Notes 4 to 6, wherein
the control apparatus determines the first part based on a shape of the target processing part.

### [Supplementary Note 13]

The processing system according to the Supplementary Note 12, wherein
the shape of the target processing part includes a distance of the target processing part along the wall part and the angle between the surface upper part and the wall part.

### [Supplementary Note 14]

The processing system according to any one of the Supplementary Notes 1 to 13 performing a third operation for removing at least a part of a third part by irradiating the third part, which is adjacent to the first part along the propagating direction, of the target processing part with the energy beam having a third fluence that is lower than the first fluence.

### [Supplementary Note 15]

The processing system according to any one of the Supplementary Notes 1 to 14, wherein
the first operation includes an operation for removing a first removal part, which is a part of the first part, by performing a scanning of the energy beam along a direction intersecting the propagating direction a plurality of number of times, and
the second operation includes an operation for removing a second removal part, which is a part of the second part, by performing a scanning of the energy beam along a direction intersecting the propagating direction a plurality of number of times.

### [Supplementary Note 16]

The processing system according to any one of the Supplementary Notes 1 to 15, wherein
the first operation includes an operation for removing a first removal part, which is a part of the first part, N times (wherein, N is a variable number representing an integer that is larger than or equal to 1), and
the second operation includes an operation for removing a second removal part, which is a part of the second part, N times.

### [Supplementary Note 17]

The processing system according to any one of the Supplementary Notes 1 to 16, wherein
the first operation includes an operation for removing a first removal part, which is a part of the first part, N times (wherein, N is a variable number representing an integer that is larger than or equal to 1), and
the second operation includes an operation for removing a second removal part, which is a part of the second part, M times (wherein, M is a variable number representing an integer that is larger than or equal to 1).

### [Supplementary Note 18]

The processing system according to the Supplementary Note 17, wherein
a thickness of the first removal part, which is removed by performing a scanning of the energy beam along a direction intersecting the propagating direction one time in the first operation, is different from a thickness of the second removal part, which is removed by performing a scanning of the energy beam along a direction intersecting the propagating direction one time in the second operation.

### [Supplementary Note 19]

The processing system according to any one of the Supplementary Notes 1 to 18 further including a position change apparatus that is configured to change a positional relationship between the object and an irradiation position of the energy beam on a surface of the object, wherein
in at least a part of a period during which the first operation is performed, the control apparatus controls the position change apparatus so as to change the positional relationship along a direction along which a boundary between the target processing part and a non-target processing part of the object on a surface of the first part.

### [Supplementary Note 20]

The processing system according to any one of the Supplementary Notes 1 to 19, wherein
the processing apparatus includes a light source that is configured to emit the energy beam, and
the control apparatus is configured to change a fluence of the energy beam by controlling the light source.

### [Supplementary Note 21]

The processing system according to any one of the Supplementary Notes 1 to 20, wherein
the processing apparatus includes an optical system that is configured to change a spot size of the energy beam on a surface of the object, and
the control apparatus is configured to change a fluence of the energy beam by controlling the optical system.

### [Supplementary Note 22]

The processing system according to any one of the Supplementary Notes 3 to 10, wherein
a normal of an exposed surface of the wall part, which is exposed by removing the target processing part, intersects a propagating direction of the energy beam after the target processing part is removed.

### [Supplementary Note 23]

The processing system according to any one of the Supplementary Notes 1 to 22, wherein
the control apparatus removes at least a part of the target processing part by alternately repeating the first and second operations.

### [Supplementary Note 24]

The processing system according to any one of the Supplementary Notes 1 to 23, wherein
the control apparatus controls the processing apparatus to alternately repeat the first and second operations and then to remove at least another part of the target processing part by repeating the second operation.

### [Supplementary Note 25]

The processing system according to the Supplementary Note 23 or 24 further including a measurement apparatus that is configured to measure another part of the target processing part after a part of the target processing part is removed by alternately repeating the first and second operations, wherein
the control apparatus controls the processing apparatus to remove another part of the target processing part by repeating the second operation based on a measured result by the measurement apparatus.

### [Supplementary Note 26]

The processing system according to any one of the Supplementary Notes 3 to 10, wherein
the control apparatus controls the processing apparatus to irradiate at least a part of an exposed surface of the wall part, which is exposed by removing the target processing part, with the energy beam.

### [Supplementary Note 27]

The processing system according to the Supplementary Note 26, wherein
an intensity of the energy beam irradiated onto at least a part of the exposed surface is lower than an intensity of the energy beam irradiated onto the target processing part.

### [Supplementary Note 28]

The processing system according to the Supplementary Note 26 or 27, wherein
the processing apparatus remove an adhered object, which is adhered to the exposed surface, from the exposed surface by irradiating at least a part of the exposed surface with the energy beam.

### [Supplementary Note 29]

The processing system according to the Supplementary Note 28, wherein
the adhered object includes a debris that is generated from the target processing part by irradiating the target processing part with the energy beam.

### [Supplementary Note 30]

A processing system including:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus is switchable between a first mode in which the subtractive manufacturing of a part of the target processing part adjacent to a non-target processing part of the object is performed in a state where a center of a beam spot of the energy beam is positioned on a boundary between the target processing part and the non-target processing part on a surface of the object and a second mode in which the subtractive manufacturing of a part of the target processing part adjacent to the non-target processing part is performed in a state where the center of the beam spot of the energy beam is positioned at a position that is away from the boundary toward an inside of the target processing part on the surface of the object.

### [Supplementary Note 31]

The processing system according to the Supplementary Note 30, wherein
the control apparatus performs the subtractive manufacturing of the part adjacent to the non-target processing part in a state where the center of the beam spot is positioned at a position that is away from the boundary by a predetermined distance on the surface of the object in the second mode.

### [Supplementary Note 32]

The processing system according to the Supplementary Note 30 or 31, wherein
the control apparatus moves the center of the beam spot on the surface of the object along a first path that is away from the boundary by a predetermined distance in the subtractive manufacturing of the part adjacent to the non-target processing part in the second mode.

### [Supplementary Note 33]

The processing system according to any one of the Supplementary Notes 30 to 32, wherein
the control apparatus moves the center of the beam spot on the surface of the object along a second path on the boundary in the subtractive manufacturing of the part adjacent to the non-target processing part in the first mode.

### [Supplementary Note 34]

The processing system according to any one of the Supplementary Notes 30 to 33, wherein
the control apparatus controls a center position of the beam spot so that the beam spot of the energy beam is not positioned on the non-target processing part in the second mode.

### [Supplementary Note 35]

The processing system according to the Supplementary Note 31 or 32, wherein
the predetermined distance is set based on a size of the beam spot on the surface of the object.

### [Supplementary Note 36]

The processing system according to the Supplementary Note 35, wherein
the size of the beam spot is related to a position at which an intensity of the energy beam is 1/e² times of that at the center of the energy beam.

### [Supplementary Note 37]

The processing system according to the Supplementary Note 35 or 36, wherein
the predetermined distance is half a diameter of the beam sport on the surface of the object.

### [Supplementary Note 38]

A processing system including:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus performs the subtractive manufacturing in a state where a center of a beam spot of the energy beam is positioned only in an inside of the target processing part that is away from a boundary between the target processing part and a non-target processing part on the surface of the object.

### [Supplementary Note 39]

The processing system according to the Supplementary Note 38, wherein
the control apparatus performs the subtractive manufacturing in a state where the center of the beam spot is positioned at a position that is away from the boundary by a predetermined distance on the surface of the object.

### [Supplementary Note 40]

The processing system according to the Supplementary Note 38 or 39, wherein
the control apparatus moves the center of the beam spot on the surface of the object along a first path that is away from the boundary by a predetermined distance.

### [Supplementary Note 41]

The processing system according to any one of the Supplementary Notes 38 to 40, wherein
the control apparatus controls a center position of the beam spot so that the beam spot of the energy beam is not positioned on the non-target processing part.

### [Supplementary Note 42]

The processing system according to the Supplementary Note 39 or 40, wherein
the predetermined distance is set based on a size of the beam spot on the surface of the object.

### [Supplementary Note 43]

The processing system according to the Supplementary Note 42, wherein
the size of the beam spot is related to a position at which an intensity of the energy beam is 1/e² times of that at the center of the energy beam.

### [Supplementary Note 44]

The processing system according to the Supplementary Note 42 or 43, wherein
the predetermined distance is half a diameter of the beam sport on the surface of the object.

### [Supplementary Note 45]

A processing system including:
a processing apparatus that is configured to perform a subtractive manufacturing for removing a part of an object by irradiating the object with an energy beam;
an acquisition unit that is configured to acquire processing data related to a target processing part in the subtractive manufacturing and information related to the energy beam;
a calculation unit is configured to change the processing data based on the information related to the energy beam to output changed processing data; and
a control apparatus that is configured to control the processing apparatus to remove a part of the object based on the changed processing data,
wherein
the subtractive manufacturing is performed in a state where a center of a beam spot of the energy beam is positioned only in an inside of the target processing part.

### [Supplementary Note 46]

The processing apparatus according to any one of the Supplementary Notes 38 to 45, wherein
the processing system further comprises:
an acquisition unit that is configured to acquire processing data related to the target processing part in the subtractive manufacturing and information related to the energy beam; and
a calculation unit is configured to change the processing data based on the information related to the energy beam to output changed processing data,
the control apparatus controls the processing apparatus to remove a part of the object based on the changed processing data.

### [Supplementary Note 47]

The processing apparatus according to the Supplementary Note 45 or 46, wherein
a size of a removed part indicated by the changed processing data is smaller than a size of a removed part indicated by the processing data.

### [Supplementary Note 48]

The processing apparatus according to any one of the Supplementary Notes 45 to 47, wherein
the calculation apparatus changes the processing data so that the subtractive manufacturing is performed in a state where a center of the beam spot is positioned at a position that is away from a boundary between the target processing part and a non-target processing part, which is adjacent to the target processing part, by a predetermined distance on a surface of the object.

### [Supplementary Note 49]

The processing apparatus according to any one of the Supplementary Notes 45 to 48, wherein
the calculation apparatus changes the processing data so that a center of the beam spot moves on a surface of the object along a first path that is away from a boundary between the target processing part and a non-target processing part, which is adjacent to the target processing part, by a predetermined distance.

### [Supplementary Note 50]

The processing apparatus according to any one of the Supplementary Notes 45 to 49, wherein
the calculation apparatus changes the processing data so that the beam spot of the energy beam is not positioned on a non-target processing part that is adjacent to the target processing part.

### [Supplementary Note 51]

The processing system according to the Supplementary Note 48 or 49, wherein
the predetermined distance is set based on a size of the beam spot on the surface of the object.

### [Supplementary Note 52]

The processing system according to the Supplementary Note 51, wherein
the size of the beam spot is related to a position at which an intensity of the energy beam is 1/e² times of that at the center of the energy beam.

### [Supplementary Note 53]

The processing system according to the Supplementary Note 51 or 52, wherein
the predetermined distance is half a diameter of the beam sport on the surface of the object.

### [Supplementary Note 54]

A processing system including:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus controls the processing apparatus to perform: a first operation for removing at least a part of a first part by irradiating the first part of the target processing part with the energy beam in a first condition; and a second operation for removing at least a part of a second part by irradiating the second part of the target processing part with the energy beam in a second condition that is different from the first condition,
the first part is adjacent to the second part.

### [Supplementary Note 55]

A processing system including:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
a center of the energy beam is positioned only in an inside of the target processing part.

### [Supplementary Note 56]

A processing system including:
a processing apparatus that is configured to perform a subtractive manufacturing for removing a part of an object by irradiating the object with an energy beam;
an acquisition unit that is configured to acquire changed processing data obtained by changing processing data related to a target processing part in the subtractive manufacturing; and
a control apparatus that is configured to control the processing apparatus to remove a part of the object based on the changed processing data,
wherein
a center of the energy beam is positioned only in an inside of the target processing part.

### [Supplementary Note 57]

A processing method that performs a subtractive manufacturing for removing a part of an object by irradiating the object with an energy beam, wherein
the processing method includes:
removing at least a part of a first part by irradiating the first part of a target processing part in the subtractive manufacturing with the energy beam having a first fluence; and
removing at least a part of a second part by irradiating the second part of the target processing part with the energy beam having a second fluence that is lower than the first fluence,
the first part is adjacent to the second part along a first direction that is a direction intersecting a propagating direction of the energy beam.

### [Supplementary Note 58]

A processing method that performs a subtractive manufacturing for removing a part of an object by irradiating the object with an energy beam, wherein
the processing method includes:
removing at least a part of a first part by irradiating the first part of a target processing part in the subtractive manufacturing with the energy beam in a first condition; and
removing at least a part of a second part by irradiating the second part of the target processing part with the energy beam in a second condition that is different from the first condition,
the first part is adjacent to the second part.

### [Supplementary Note 59]

A processing method that performs a subtractive manufacturing for removing a part of an object by irradiating the object with an energy beam, wherein
the processing method includes switching an operation mode of the subtractive manufacturing between a first mode and a second mode,
the first mode is a mode in which the subtractive manufacturing is performed in a state where a center of a beam spot of the energy beam is positioned on a boundary between a target processing part in the subtractive manufacturing and a non-target processing part, which is adjacent to the target processing part, on a surface of the object,
the second mode is a mode in which the subtractive manufacturing is performed in a state where the center of the beam spot of the energy beam is positioned in an inside of the target processing part on the surface of the object.

### [Supplementary Note 60]

A processing method that performs a subtractive manufacturing for removing a part of an object by irradiating the object with an energy beam, wherein
the subtractive manufacturing is performed in a state where the center of the beam spot of the energy beam is positioned only in an inside of a target processing part in the subtractive manufacturing on the surface of the object.

### [Supplementary Note 61]

A processing method that performs a subtractive manufacturing for removing a part of an object by irradiating the object with an energy beam, wherein
the processing method includes:
acquiring processing data related to a target processing part in the subtractive manufacturing and information related to the energy beam;
changing the processing data based on the processing data and the information related to the energy beam to output changed processing data; and
removing a part of the object based on the changed processing data,
a center of a beam spot of the energy beam is positioned only in an inside of the target processing part.

### [Supplementary Note 62]

A processing method that performs a subtractive manufacturing for removing a part of an object by irradiating the object with an energy beam, wherein
the processing method includes:
acquiring changed processing data obtained by changing processing data related to a target processing part in the subtractive manufacturing; and
removing a part of the object based on the changed processing data,
a center of a beam spot of the energy beam is positioned only in an inside of the target processing part.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing system and a processing method, which involve such changes, are also intended to be within the technical scope of the present invention.

### Description of Reference Codes

- SYS: processing system
- 1: processing unit
- 12: processing head
- 2: measurement unit
- 3: stage unit
- 4: control unit
- EL: processing light
- W: workpiece
- TP: target processing part
- WTP1: first part
- WTP2: second part
- WTP3: third part
- NP: non-target processing part
- BD: boundary
- WP: wall part
- WS: wall surface
- Se: exposed surface

## Claims

1. A processing system comprising:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus controls the processing apparatus to perform: a first operation for removing at least a part of a first part by irradiating the first part of the target processing part with the energy beam having a first fluence; and a second operation for removing at least a part of a second part by irradiating the second part of the target processing part with the energy beam having a second fluence that is lower than the first fluence,
the first part is adjacent to the second part along a first direction that intersects a propagating direction of the energy beam.

2. The processing system according to claim 1, wherein
the first part is adjacent to a non-target processing part of the object along the first direction, and
the second part is positioned at a position that is adjacent to the first part along the first direction and that is away from the non-target processing part more than the first part is.

3. The processing system according to claim 2, wherein
the non-target processing part includes a wall part that extends along the propagating direction.

4. The processing system according to claim 2, wherein
the non-target processing part includes at least a surface upper part and a wall part, and
an angle between the surface upper part and the wall part is larger than 82 degrees.

5. The processing system according to claim 2, wherein
the non-target processing part includes at least a surface upper part and a wall part, and
an angle between the surface upper part and the wall part is larger than 78 degrees.

6. The processing system according to claim 2, wherein
the non-target processing part includes at least a surface upper part and a wall part, and
an angle between the surface upper part and the wall part is approximately 90 degrees.

7. The processing system according to claim 2, wherein
the non-target processing part includes at least a wall part, and
an angle between the wall part and an axis long a propagating direction of the processing light is equal to or smaller than 8 degrees.

8. The processing system according to claim 2, wherein
the non-target processing part includes at least a wall part, and
an angle between the wall part and an axis long a propagating direction of the processing light is equal to or smaller than 12 degrees.

9. The processing system according to claim 2, wherein
the non-target processing part includes at least a wall part, and
an angle between surface upper part and the wall part is approximately 0 degree.

10. The processing system according to any one of claims 3 to 9, wherein
the wall part is approximately parallel to the propagating direction.

11. The processing system according to any one of claims 1 to 3 and 10, wherein
the control apparatus determines the first part based on a shape of the target processing part.

12. The processing system according to any one of claims 4 to 6, wherein
the control apparatus determines the first part based on a shape of the target processing part.

13. The processing system according to claim 12, wherein
the shape of the target processing part includes a distance of the target processing part along the wall part and the angle between the surface upper part and the wall part.

14. The processing system according to any one of claims 1 to 13 performing a third operation for removing at least a part of a third part by irradiating the third part, which is adjacent to the first part along the propagating direction, of the target processing part with the energy beam having a third fluence that is lower than the first fluence.

15. The processing system according to any one of claims 1 to 14, wherein
the first operation includes an operation for removing a first removal part, which is a part of the first part, by performing a scanning of the energy beam along a direction intersecting the propagating direction a plurality of number of times, and
the second operation includes an operation for removing a second removal part, which is a part of the second part, by performing a scanning of the energy beam along a direction intersecting the propagating direction a plurality of number of times.

16. The processing system according to any one of claims 1 to 15, wherein
the first operation includes an operation for removing a first removal part, which is a part of the first part, N times (wherein, N is a variable number representing an integer that is larger than or equal to 1), and
the second operation includes an operation for removing a second removal part, which is a part of the second part, N times.

17. The processing system according to any one of claims 1 to 16, wherein
the first operation includes an operation for removing a first removal part, which is a part of the first part, N times (wherein, N is a variable number representing an integer that is larger than or equal to 1), and
the second operation includes an operation for removing a second removal part, which is a part of the second part, M times (wherein, M is a variable number representing an integer that is larger than or equal to 1).

18. The processing system according to claim 17, wherein
a thickness of the first removal part, which is removed by performing a scanning of the energy beam along a direction intersecting the propagating direction one time in the first operation, is different from a thickness of the second removal part, which is removed by performing a scanning of the energy beam along a direction intersecting the propagating direction one time in the second operation.

19. The processing system according to any one of claims 1 to 18 further comprising a position change apparatus that is configured to change a positional relationship between the object and an irradiation position of the energy beam on a surface of the object, wherein
in at least a part of a period during which the first operation is performed, the control apparatus controls the position change apparatus so as to change the positional relationship along a direction along which a boundary between the target processing part and a non-target processing part of the object on a surface of the first part.

20. The processing system according to any one of claims 1 to 19, wherein
the processing apparatus includes a light source that is configured to emit the energy beam, and
the control apparatus is configured to change a fluence of the energy beam by controlling the light source.

21. The processing system according to any one of claims 1 to 20, wherein
the processing apparatus includes an optical system that is configured to change a spot size of the energy beam on a surface of the object, and
the control apparatus is configured to change a fluence of the energy beam by controlling the optical system.

22. The processing system according to any one of claims 3 to 10, wherein
a normal of an exposed surface of the wall part, which is exposed by removing the target processing part, intersects a propagating direction of the energy beam after the target processing part is removed.

23. The processing system according to any one of claims 1 to 22, wherein
the control apparatus removes at least a part of the target processing part by alternately repeating the first and second operations.

24. The processing system according to any one of claims 1 to 23, wherein
the control apparatus controls the processing apparatus to alternately repeat the first and second operations and then to remove at least another part of the target processing part by repeating the second operation.

25. The processing system according to claim 23 or 24 further comprising a measurement apparatus that is configured to measure another part of the target processing part after a part of the target processing part is removed by alternately repeating the first and second operations, wherein
the control apparatus controls the processing apparatus to remove another part of the target processing part by repeating the second operation based on a measured result by the measurement apparatus.

26. The processing system according to any one of claims 3 to 10, wherein
the control apparatus controls the processing apparatus to irradiate at least a part of an exposed surface of the wall part, which is exposed by removing the target processing part, with the energy beam.

27. The processing system according to claim 26, wherein
an intensity of the energy beam irradiated onto at least a part of the exposed surface is lower than an intensity of the energy beam irradiated onto the target processing part.

28. The processing system according to claim 26 or 27, wherein
the processing apparatus remove an adhered object, which is adhered to the exposed surface, from the exposed surface by irradiating at least a part of the exposed surface with the energy beam.

29. The processing system according to claim 28, wherein
the adhered object includes a debris that is generated from the target processing part by irradiating the target processing part with the energy beam.

30. A processing system comprising:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus is switchable between a first mode in which the subtractive manufacturing of a part of the target processing part adjacent to a non-target processing part of the object is performed in a state where a center of a beam spot of the energy beam is positioned on a boundary between the target processing part and the non-target processing part on a surface of the object and a second mode in which the subtractive manufacturing of a part of the target processing part adjacent to the non-target processing part is performed in a state where the center of the beam spot of the energy beam is positioned at a position that is away from the boundary toward an inside of the target processing part on the surface of the object.

31. The processing system according to claim 30, wherein
the control apparatus performs the subtractive manufacturing of the part adjacent to the non-target processing part in a state where the center of the beam spot is positioned at a position that is away from the boundary by a predetermined distance on the surface of the object in the second mode.

32. The processing system according to claim 30 or 31, wherein
the control apparatus moves the center of the beam spot on the surface of the object along a first path that is away from the boundary by a predetermined distance in the subtractive manufacturing of the part adjacent to the non-target processing part in the second mode.

33. The processing system according to any one of claims 30 to 32, wherein
the control apparatus moves the center of the beam spot on the surface of the object along a second path on the boundary in the subtractive manufacturing of the part adjacent to the non-target processing part in the first mode.

34. The processing system according to any one of claims 30 to 33, wherein
the control apparatus controls a center position of the beam spot so that the beam spot of the energy beam is not positioned on the non-target processing part in the second mode.

35. The processing system according to claim 31 or 32, wherein
the predetermined distance is set based on a size of the beam spot on the surface of the object.

36. The processing system according to claim 35, wherein
the size of the beam spot is related to a position at which an intensity of the energy beam is 1/e² times of that at the center of the energy beam.

37. The processing system according to claim 35 or 36, wherein
the predetermined distance is half a diameter of the beam sport on the surface of the object.

38. A processing system comprising:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus performs the subtractive manufacturing in a state where a center of a beam spot of the energy beam is positioned only in an inside of the target processing part that is away from a boundary between the target processing part and a non-target processing part on the surface of the object.

39. The processing system according to claim 38, wherein
the control apparatus performs the subtractive manufacturing in a state where the center of the beam spot is positioned at a position that is away from the boundary by a predetermined distance on the surface of the object.

40. The processing system according to claim 38 or 39, wherein
the control apparatus moves the center of the beam spot on the surface of the object along a first path that is away from the boundary by a predetermined distance.

41. The processing system according to any one of claims 38 to 40, wherein
the control apparatus controls a center position of the beam spot so that the beam spot of the energy beam is not positioned on the non-target processing part.

42. The processing system according to claim 39 or 40, wherein
the predetermined distance is set based on a size of the beam spot on the surface of the object.

43. The processing system according to claim 42, wherein
the size of the beam spot is related to a position at which an intensity of the energy beam is 1/e² times of that at the center of the energy beam.

44. The processing system according to claim 42 or 43, wherein
the predetermined distance is half a diameter of the beam sport on the surface of the object.

45. A processing system comprising:
a processing apparatus that is configured to perform a subtractive manufacturing for removing a part of an object by irradiating the object with an energy beam;
an acquisition unit that is configured to acquire processing data related to a target processing part in the subtractive manufacturing and information related to the energy beam;
a calculation unit is configured to change the processing data based on the information related to the energy beam to output changed processing data; and
a control apparatus that is configured to control the processing apparatus to remove a part of the object based on the changed processing data,
wherein
the subtractive manufacturing is performed in a state where a center of a beam spot of the energy beam is positioned only in an inside of the target processing part.

46. The processing apparatus according to any one of claims 38 to 45, wherein
the processing system further comprises:
an acquisition unit that is configured to acquire processing data related to the target processing part in the subtractive manufacturing and information related to the energy beam; and
a calculation unit is configured to change the processing data based on the information related to the energy beam to output changed processing data,
the control apparatus controls the processing apparatus to remove a part of the object based on the changed processing data.

47. The processing apparatus according to claim 45 or 46, wherein
a size of a removed part indicated by the changed processing data is smaller than a size of a removed part indicated by the processing data.

48. The processing apparatus according to any one of claims 45 to 47, wherein
the calculation apparatus changes the processing data so that the subtractive manufacturing is performed in a state where a center of the beam spot is positioned at a position that is away from a boundary between the target processing part and a non-target processing part, which is adjacent to the target processing part, by a predetermined distance on a surface of the object.

49. The processing apparatus according to any one of claims 45 to 48, wherein
the calculation apparatus changes the processing data so that a center of the beam spot moves on a surface of the object along a first path that is away from a boundary between the target processing part and a non-target processing part, which is adjacent to the target processing part, by a predetermined distance.

50. The processing apparatus according to any one of claims 45 to 49, wherein
the calculation apparatus changes the processing data so that the beam spot of the energy beam is not positioned on a non-target processing part that is adjacent to the target processing part.

51. The processing system according to claim 48 or 49, wherein
the predetermined distance is set based on a size of the beam spot on the surface of the object.

52. The processing system according to claim 51, wherein
the size of the beam spot is related to a position at which an intensity of the energy beam is 1/e² times of that at the center of the energy beam.

53. The processing system according to claim 51 or 52, wherein
the predetermined distance is half a diameter of the beam sport on the surface of the object.

54. A processing system comprising:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
the control apparatus controls the processing apparatus to perform: a first operation for removing at least a part of a first part by irradiating the first part of the target processing part with the energy beam in a first condition; and a second operation for removing at least a part of a second part by irradiating the second part of the target processing part with the energy beam in a second condition that is different from the first condition,
the first part is adjacent to the second part.

55. A processing system comprising:
a processing apparatus that is configured to perform a subtractive manufacturing for removing a part of an object by irradiating the object with an energy beam; and
a control apparatus that is configured to control the processing apparatus to remove a target processing part in the subtractive manufacturing,
wherein
a center of the energy beam is positioned only in an inside of the target processing part.

56. A processing system comprising:
a processing apparatus that is configured to perform a subtractive manufacturing for removing a part of an object by irradiating the object with an energy beam;
an acquisition unit that is configured to acquire changed processing data obtained by changing processing data related to a target processing part in the subtractive manufacturing; and
a control apparatus that is configured to control the processing apparatus to remove a part of the object based on the changed processing data,
wherein
a center of the energy beam is positioned only in an inside of the target processing part.
